# EUROPÄISCHE PATENTSCHRIFT

(11) **EP 3 679 090 B1**
(45) Veröffentlichungstag und Bekanntmachung des Hinweises auf die Patenterteilung: **26.02.2025**
(21) Anmeldenummer: 18762078.6
(22) Anmeldetag: 29.08.2018
(51) Int. Cl.: C08K 3/32, C08K 5/3492, C08K 5/5313, C08K 5/5317, C08K 7/14, C08L 77/06, C08L 67/02, C08L 77/02, C08K 5/098, C08K 5/101

(54) **FLAMMHEMMENDE POLYESTERZUSAMMENSETZUNGEN UND DEREN VERWENDUNG**
FLAME-RETARDANT POLYESTER COMPOSITIONS AND USE THEREOF
COMPOSITIONS DE POLYESTER IGNIFUGES ET LEUR UTILISATION

(30) Priorität: 07.09.2017 DE 102017215773
(43) Veröffentlichungstag der Anmeldung: 15.07.2020
(73) Patentinhaber: Clariant International Ltd, 4132 Muttenz (CH)
(72) Erfinder: BAUER, Harald, 50170 Kerpen (DE); HÖROLD, Sebastian, 86420 Diedorf (DE); SICKEN, Martin, 51149 Köln (DE)
(74) Vertreter: Clariant Produkte (Deutschland) GmbH
(86) Internationale Anmeldenummer: PCT/EP2018/073226
(87) Internationale Veröffentlichungsnummer: WO 2019/048307

(56) Entgegenhaltungen:
- EP-A1- 1 544 206
- EP-A1- 1 544 206
- WO-A1-2012/045414
- WO-A1-2012/045414
- DE-A1- 102014 001 222
- DE-A1- 102014 001 222

## Beschreibung

Die vorliegende Erfindung betrifft flammhemmende Polyesterzusammensetzungen sowie daraus hergestellte Formteile.

Brennbare Kunststoffe müssen in der Regel mit Flammschutzmitteln ausgerüstet werden, um die von den Kunststoffverarbeitern und teilweise vom Gesetzgeber geforderten hohen Flammschutzanforderungen erreichen zu können. Bevorzugt - auch aus ökologischen Gründen - werden nicht-halogenierte Flammschutzmittelsysteme eingesetzt, die nur geringe oder keine Rauchgase bilden.

Unter diesen Flammschutzmitteln haben sich die Salze von Phosphinsäuren (Phosphinate) als besonders für thermoplastische Polymere wirksam erwiesen (DE 2 252 258 A und DE 2 447 727 A).

Darüber hinaus sind synergistische Kombinationen von Phosphinaten mit bestimmten stickstoffhaltigen Verbindungen bekannt, die in einer ganzen Reihe von Polymeren als Flammschutzmittel effektiver wirken, als die Phosphinate allein (WO-2002/28953 A1 sowie DE 197 34 437 A1 und DE 197 37 727 A1).

Aus der US 7,420,007 B2 (entsprechend EP 1,544,206 A1) ist bekannt, dass Dialkylphosphinate enthaltend eine geringe Menge an ausgewählten Telomeren als Flammschutzmittel für Polymere geeignet sind, wobei das Polymere bei der Einarbeitung des Flammschutzmittels in die Polymermatrix nur einem recht geringen Abbau unterliegt.

WO 2012/045414 A1 beschreibt Flammschutzmittel-Stabilisator-Kombinationen für thermoplastische Polymere. Diese Kombinationen enthalten eine Mischung aus einem Salz einer Dialkylphosphinsäure mit einem Salz der Phosphonsäure sowie gegebenenfalls weitere Stickstoff- oder Phosphor-Stickstoff-haltige Flammschutzmittel

Aus der DE 10 2014 001 222 A1 sind halogenfreie Flammschutzmittelmischungen mit gleichmäßiger Rieselfähigkeit bekannt, Diese enthalten Salze der Dialkylphosphinsäure, nicht brennbare Zusätze und Aluminiumphosphit.

Flammschutzmittel müssen häufig in hohen Dosierungen zugesetzt werden, um eine ausreichende Flammwidrigkeit des Kunststoffs nach internationalen Normen sicherzustellen. Aufgrund ihrer chemischen Reaktivität, die für die Flammschutzwirkung bei hohen Temperaturen erforderlich ist, können Flammschutzmittel, vor allem bei höheren Dosierungen, die Verarbeitungsstabilität von Kunststoffen beeinträchtigen. Es kann zu verstärktem Polymerabbau, zu Vernetzungsreaktionen, zu Ausgasungen oder Verfärbungen kommen.

Aus der DE 10 2007 041 594 A1 sind flammwidrige Polyestercompounds bekannt, die thermoplastischen Polyester, Polycarbonat, Phosphinsäuresalz und gegebenenfalls Umsetzungsprodukte des Melamins mit Phosphorsäure und/oder kondensierten Phosphorsäuren bzw. andere stickstoffhaltige Flammschutzmittel und gegebenenfalls Verstärkungsstoffe und/oder weitere Additive enthalten. Diese zeichnen sich durch eine sichere UL 94 V-0 Einstufung, erhöhte Glühdrahtfestigkeit, verbesserte Mechanik und verringerten Polymerabbau aus.

Weitere flammwidrige Polyestercompounds mit diesem Eigenschaftsprofil werden in der DE 10 2010 049 968 A1 offenbart. Diese Compounds enthalten thermoplastischen Polyester, Phosphinsäuresalz, Phosphazen und gegebenenfalls Umsetzungsprodukte des Melamins mit Phosphorsäure und/oder kondensierten Phosphorsäuren bzw. andere stickstoffhaltige Flammschutzmittel und gegebenenfalls Verstärkungsstoffe und/oder weitere Additive.

Bislang fehlt es jedoch an flammgeschützten phosphinathaltigen Polyesterzusammensetzungen die alle geforderten Eigenschaften gleichzeitig erreichen, wie gute elektrische Werte sowie einen effektiven Flammschutz, sowie gleichzeitig eine gute Entformbarkeit und eine glatte Oberfläche des Formteils.

Es war daher Aufgabe der vorliegenden Erfindung, flammgeschützte Polyesterzusammensetzungen auf Basis phosphinathaltiger Flammschutzsysteme zur Verfügung zu stellen, die alle vorgenannten Eigenschaften gleichzeitig aufweisen und die insbesondere gute elektrische Werte (GWFI, GWIT, CTI), sowie einen effektiven Flammschutz (UL-94), sowie gleichzeitig eine gute Entformbarkeit und eine glatte Oberfläche des Formteils (Oberfläche).

Da Wachse üblicherweise Ausblühungen bilden können, die rauhe Oberflächen verursachen, sind die gefundenen Ergebnisse betreffend der glatten Oberfläche der Formteile besonders erfinderisch.

Gegenstand der Erfindung ist eine flammhemmende Polyesterzusammensetzung, enthaltend
- 25 bis 95 Gew.-% thermoplastischen Polyester als Komponente A,
- 1 bis 45 Gew.-% Füllstoffe und/oder Verstärkungsstoffe, vorzugsweise Glasfasern, als Komponente B,
- 1 bis 35 Gew.-% Phosphinsäuresalz der Formel (I) als Komponente C 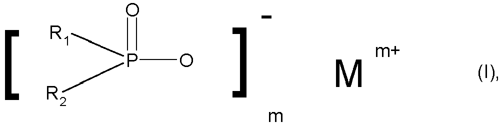
   worin R₁ und R₂ Ethyl bedeuten,
   M Al, Fe, TiOₚ oder Zn ist,
   m 2 bis 3, vorzugsweise 2 oder 3, bedeutet, und
   p = (4 - m) / 2 ist,
- 0,01 bis 3 Gew.-% Verbindung ausgewählt aus der Gruppe der Al-, Fe-, TiOₚ- oder Zn-Salze der Ethylbutylphosphinsäure, der Dibutylphosphinsäure, der Ethylhexylphosphinsäure, der Butylhexylphosphinsäure und/oder der Dihexylphosphinsäure als Komponente D
- 0,001 bis 1 Gew.-% Phosphonsäuresalz der Formel (II) als Komponente E 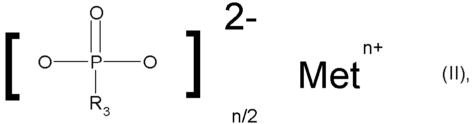
   worin R₃ Ethyl bedeutet,
   Met Al, Fe, TiO_{q} oder Zn ist,
   n 2 bis 3, vorzugsweise 2 oder 3, bedeutet, und
   q = (4 - n) / 2 ist
- 0,005 bis 6 Gew.-% anorganisches Phosphonat als Komponente F, und
- 0,05 bis 5 Gew.-% Wachs ausgewählt aus der Gruppe der Polyolefinwachse, Amidwachse, natürlichen Wachse, langkettigen aliphatischen Carbonsäuren mit einer Kettenlänge von C₁₄ bis C₄₀ (Fettsäuren) und/oder deren Estern oder Salzen als Komponente G, wobei die Prozentangaben sich auf die Gesamtmenge der Polyesterzusammensetzung beziehen.

In der erfindungsgemäßen Polyesterzusammensetzung beträgt der Anteil an Komponente A25 bis 95 Gew.-%, vorzugsweise 25 bis 75 Gew.-%.

In der erfindungsgemäßen Polyesterzusammensetzung beträgt der Anteil an Komponente B 1 bis 45 Gew.-%, vorzugsweise 20 bis 40 Gew.-%.

In der erfindungsgemäßen Polyesterzusammensetzung beträgt der Anteil an Komponente C 1 bis 35 Gew.-%, vorzugsweise 5 bis 20 Gew.-%.

In der erfindungsgemäßen Polyesterzusammensetzung beträgt der Anteil an Komponente D 0,01 bis 3 Gew.-%, vorzugsweise 0,05 bis 1,5 Gew.-%.

In der erfindungsgemäßen Polyesterzusammensetzung beträgt der Anteil an Komponente E 0,001 bis 1 Gew.-%, vorzugsweise 0,01 bis 0,6 Gew.-%.

In der erfindungsgemäßen Polyesterzusammensetzung beträgt der Anteil an Komponente F 0,005 bis 6 Gew.-%, vorzugsweise 0,05 bis 2 Gew.-%.

In der erfindungsgemäßen Polyesterzusammensetzung beträgt der Anteil an Komponente G 0,05 bis 5 Gew.-%, vorzugsweise 0,1 bis 2 Gew.-%.

Dabei beziehen sich die Prozentangaben für die Anteile der Komponenten A bis G auf die Gesamtmenge der Polyesterzusammensetzung.

Bei den erfindungsgemäßen flammhemmenden Polyesterzusammensetzungen beträgt
- der Anteil von Komponente A 25 bis 95 Gew.-%,
- der Anteil von Komponente B 1 bis 45 Gew.-%,
- der Anteil von Komponente C 1 bis 35 Gew.-%,
- der Anteil von Komponente D 0,01 bis 3 Gew.-%,
- der Anteil von Komponente E 0,001 bis 1 Gew.-%,
- der Anteil von Komponente F 0,005 bis 6 Gew.-%, und
- der Anteil von Komponente G 0,05 bis 5 Gew.-%,
wobei die Prozentangaben sich auf die Gesamtmenge der Polyesterzusammensetzung beziehen.

Besonders bevorzugt werden flammhemmende Polyesterzusammensetzung bei denen
- der Anteil von Komponente A 25 bis 75 Gew.-%,
- der Anteil von Komponente B 20 bis 40 Gew.-%,
- der Anteil von Komponente C 5 bis 20 Gew.-%,
- der Anteil von Komponente D 0,05 bis 1,5 Gew.-%,
- der Anteil von Komponente E 0,01 bis 0,6 Gew.-%,
- der Anteil von Komponente F 0,05 bis 2 Gew.-%, und
- der Anteil von Komponente G 0,1 bis 2 Gew.-%
   beträgt.

Bevorzugt eingesetzte Salze der Komponente C sind solche, worin M^{m+} Zn²⁺, Fe³⁺ oder insbesondere Al³⁺ bedeuten.

Bevorzugt eingesetzte Salze der Komponente D sind Zink-, Eisen- oder insbesondere Aluminiumsalze.

Bevorzugt eingesetzte Salze der Komponente E sind solche, worin Metⁿ⁺ Zn²⁺, Fe³⁺ oder insbesondere Al³⁺ bedeuten.

Ganz besonders bevorzugt werden flammhemmende Polyesterzusammensetzungen, in denen M und Met Al bedeuten, m und n 3 sind und in denen die Verbindungen der Komponenten D und F als Aluminiumsalze vorliegen.

In einer weiteren bevorzugten Ausführungsform enthalten die oben beschriebenen flammhemmenden Polyesterzusammensetzungen Eisen in einer Menge im Bereich von 0,0001 bis 0,2 Gew.-%, vorzugsweise von 0,0002 bis 0,05 Gew.-%.

Das Eisen kann dabei in elementarer Form oder in Form einer Eisen enthaltenden Legierung vorliegen. Bevorzugt liegt das Eisen jedoch in Form einer Eisen enthaltenden Substanz vor, also in Form einer ionischen oder nichtionischen Eisenverbindung. Beispielsweise kann Eisen als kationische Komponente in den Komponenten C, D, E und/oder F vorliegen oder es können andere Eisensalze oder auch Eisenkomplexe eingesetzt werden.

Überraschenderweise wurde gefunden, dass die erfindungsgemäßen Polyesterzusammensetzungen in der Gegenwart von Eisen ein verbreitertes Verarbeitungsfenster bei der Compoundierung bzw. beim Spritzgießen sowie eine verbesserte thermische Beständigkeit aufweisen, bei gleichzeitig guter Flammschutzwirkung.

Besonders bevorzugt liegen die Flammschutzmittelkomponenten C) bis F) als physikalische Mischung mit Eisen enthaltenden Verbindungen vor.

Ebenfalls besonders bevorzugt enthält mindestens eine der Flammschutzmittelkomponenten C), D), E) oder F) Eisen.

Bevorzugt handelt es sich bei den Eisenverbindungen zur Herstellung der erfindungsgemäßen Polyesterzusammensetzungen um Eisen (II)- und/oder Eisen(III)salze.

In einer weiteren bevorzugten Ausführungsform enthält die erfindungsgemäße Polyesterzusammensetzung als Komponente H ein Melaminpolyphosphat mit einem mittleren Kondensationsgrad von 2 bis 200.

Die Verwendung der erfindungsgemäß als Komponente H eingesetzten Polyphosphatderivate von Melamin mit einem Kondensationsgrad von größer gleich 20 als Flammschutzmittel ist bekannt. So offenbart die DE 10 2005 016 195 A1 ein stabilisiertes Flammschutzmittel enthaltend 99 bis 1 Gew.-% Melaminpolyphosphat und 1 bis 99 Gew.-% Additiv mit Reservealkalität. In diesem Dokument wird auch offenbart, dass dieses Flammschutzmittel mit einer Phosphinsäure und/oder einem Phosphinsäuresalz kombiniert werden kann.

Bevorzugte erfindungsgemäße Polyesterzusammensetzungen enthalten als Komponente H ein Melaminpolyphosphat, dessen durchschnittlicher Kondensationsgrad 20 bis 200, insbesondere von 40 bis 150, beträgt.

In einem anderen bevorzugten Bereich beträgt der durchschnittliche Kondensationsgrad bei 2 bis 100.

Weitere bevorzugte erfindungsgemäße Polyesterzusammensetzungen enthalten als Komponente H ein Melaminpolyphosphat, das eine Zersetzungstemperatur von größer gleich 320 °C, insbesondere von größer gleich 360 °C und ganz besonders bevorzugt von größer gleich 400 °C aufweist.

Bevorzugt werden als Komponente H Melaminpolyphosphate eingesetzt, die aus WO 2006/027340 A1 (entsprechend EP 1 789 475 B1) und WO 2000/002869 A1 (entsprechend EP 1 095 030 B1) bekannt sind.

Bevorzugt werden Melaminpolyphosphate eingesetzt, deren durchschnittlicher Kondensationsgrad zwischen 20 und 200, insbesondere zwischen 40 und 150 liegt, und deren Melamingehalt 1,1 bis 2,0 mol, insbesondere 1,2 bis 1,8 mol pro Mol Phosphoratom beträgt.

Ebenfalls bevorzugt werden Melaminpolyphosphate eingesetzt, deren mittlerer Kondensationsgrat (Zahlenmittel) >20 ist, deren Zersetzungstemperatur größer als 320 °C ist, deren Molverhältnis von 1,3,5-Triazinverbindung zu Phosphor kleiner als 1,1, insbesondere 0,8 bis 1,0 beträgt und deren pH-Wert einer 10 %-igen Aufschlämmung in Wasser bei 25 °C 5 oder höher ist, vorzugsweise 5,1 bis 6,9.

In der erfindungsgemäßen Polyesterzusammensetzung beträgt der Anteil an Komponente H üblicherweise 0 und 25 Gew.-%, vorzugsweise 1 bis 25 Gew.-%, insbesondere 2 bis 10 Gew.-%, bezogen auf die Gesamtmenge der Polyesterzusammensetzung.

In einer weiteren bevorzugten Ausführungsform enthält die erfindungsgemäße Polyesterzusammensetzung als Komponente I Melamincyanurat.

Das erfindungsgemäß als Komponente I eingesetzte Melamincyanurat ist als Synergist in Verbindung mit Diethylphosphinaten in Flammschutzmitteln für polymere Formmassen bekannt, beispielsweise aus WO 97/39053 A1).

In der erfindungsgemäßen Polyesterzusammensetzung beträgt der Anteil an Komponente I üblicherweise 0 und 25 Gew.-%, vorzugsweise 1 bis 25 Gew.-%, insbesondere 4 bis 10 Gew.-%, bezogen auf die Gesamtmenge der Polyesterzusammensetzung.

Bevorzugt sind erfindungsgemäße flammhemmende Polyesterzusammensetzungen, die einen Comparative Tracking Index, gemessen nach dem International Electrotechnical Commission Standard IEC-60112/3, von größer gleich 500 Volt aufweisen.

Ebenfalls bevorzugte erfindungsgemäße flammhemmende Polyesterzusammensetzungen erreichen eine Bewertung von V0 nach UL-94, insbesondere gemessen an Formteilen von 3,2 mm bis 0,4 mm Dicke.

Weitere bevorzugte erfindungsgemäße flammhemmende Polyesterzusammensetzungen weisen einen Glow Wire Flammability Index nach IEC-60695-2-12 von mindestens 960 °C auf, insbesondere gemessen an Formteilen von 0,75 - 3 mm Dicke.

Weitere bevorzugte erfindungsgemäße flammhemmende Polyesterzusammensetzungen weisen eine Glühdrahtbeständigkeit, ausgedrückt durch die Glühtdrahtentzündungstemperature (Glow-Wire-Ignition-Temperature; GWIT) nach IEC-60695-2-13 von mindestens 775 °C auf, insbesondere gemessen an Formteilen von 0,75 - 3 mm Dicke.

Die erfindungsgemäß eingesetzten Flammschutzmittelkombinationen stabilisieren den Polyester (Komponente A) sehr gut gegen thermischen Abbau. Dieses zeigt sich an der Veränderung der spezifischen Viskosität des Polyesters bei Compoundierung und Formgebung der erfindungsgemäßen Polyesterzusammensetzungen. Die dort erfolgende thermische Belastung hat einen teilweisen Abbau der Polyesterketten zur Folge, was in einer Verringerung des mittleren Molekular-gewichts und damit verbunden in einer Verringerung der Viskosität einer Polyesterlösung ausdrückt. Typische Werte für die spezifische Viskosität von Polybutylenterephthalat, gemessen als 0,5 %-ige-Lösung in Phenol/Dichlorbenzol (1:1) bei 25 °C gemäß ISO 1628 mit einem Kapillarviskosimeter betragen 130 cm³/g. Nach dem Compoundieren und der Formgebung einer erfindungsgemäßen Polybutylenterephthalatzusammensetzung bewegen sich typische Werte für die spezifische Viskosität des verarbeiteten Polybutylenterephthalats (ermittelt wie oben angegeben) im Bereich zwischen 65 und 150 cm³/g, vorzugsweise zwischen 100 und 129 cm³/g.

Die erfindungsgemäßen Polyesterzusammensetzungen enthalten als Komponente A ein oder mehrere thermoplastische Polyester.

Bei den Polyestern der Komponente A handelt es sich in der Regel um (cyclo)aliphatische oder um aromatisch-aliphatische Polyester, die sich von (cyclo)aliphatischen und/oder aromatischen Dicarbonsäuren oder deren polyesterbildenden Derivaten, wie deren Dialkylestern oder Anhydriden, und von (cyclo)aliphatischen und/oder araliphatischen Diolen oder von (cyclo)aliphatischen und/oder aromatischen Hydroxycarbonsäuren oder deren polyesterbildenden Derivaten, wie deren Alkylestern oder Anhydriden, ableiten. Der Begriff "(cyclo)aliphatisch" umfasst cycloaliphatische und aliphatische Verbindungen.

Die thermoplastischen Polyester der Komponente A werden vorzugsweise ausgewählt aus der Gruppe der Polyalkylenester von aromatischen und/oder aliphatischen Dicarbonsäuren oder deren Dialkylestern.

Die als Komponente A eingesetzten thermoplastischen Polyester lassen sich nach bekannten Methoden herstellen (Kunststoff-Handbuch, Bd. VIII, Seiten 695 - 710, Karl-Hanser-Verlag, München 1973).

Bevorzugt eingesetzte Komponenten A sind aromatisch-aliphatische thermoplastische Polyester und davon bevorzugt thermoplastische Polyester abgeleitet durch Umsetzung von aromatischen Dicarbonsäuren oder deren polyesterbildenden Derivaten mit aliphatischen C₂-C₁₀-Diolen, insbesondere mit C₂-C₄-Diolen.

Erfindungsgemäß bevorzugt eingesetzte Komponenten A sind Polyalkylenterepthalate, und davon besonders bevorzugt Polyethylenterephthalate oder Polybutylenterephthalate.

Polyalkylenterephthalate enthalten vorzugsweise mindestens 80 mol-%, insbesondere 90 mol-%, bezogen auf die Dicarbonsäure, von Terephthalsäure abgeleitete Einheiten.

Die erfindungsgemäß als Komponente A bevorzugt eingesetzten Polyalkylenterephthalate können neben Terephthalsäureresten bis zu 20 mol-% Reste anderer aromatischer Dicarbonsäuren mit 8 bis 14 C-Atomen oder Reste aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacin- oder Azelainsäure, Cyclohexandiessigsäure oder Cyclohexandicarbonsäure.

Die erfindungsgemäß als Komponente A bevorzugt eingesetzten Polyalkylenterephthalate können durch Einbau relativ kleiner Mengen 3- oder 4-wertiger Alkohole oder 3- oder 4-basischer Carbonsäuren, wie sie z. B. in der DE-A-19 00 270 beschrieben sind, verzweigt werden. Beispiele für bevorzugte Verzweigungsmittel sind Trimesinsäure, Trimellitsäure, Trimethylolethan und -propan und Pentaerythrit.

Besonders bevorzugte Komponenten A sind Polyalkylenterephthalate, die allein aus Terephthalsäure und deren reaktionsfähigen Derivaten (z. B. deren Dialkylestern) und Ethylenglykol und/oder Propandiol-1,3 und/oder Butandiol-1,4 hergestellt werden (Polyethylen- und Polytrimethylen- und Polybutylenterephthalat) und Mischungen dieser Polyalkylenterephthalate.

Bevorzugte Polybutylenterephthalate enthalten mindestens 80 mol-%, vorzugsweise 90 mol-%, bezogen auf die Dicarbonsäure, Terephthalsäurereste und mindestens 80 mol-%, vorzugsweise mindestens 90 mol-%, bezogen auf die Diolkomponente Butandiol-1,4-reste.

Die bevorzugten Polybutylenterephthalate können des Weiteren neben Butandiol-1,4-resten bis zu 20 mol-% anderer aliphatischer Diole mit 2 bis 12 C-Atomen oder cycloaliphatischer Diole mit 6 bis 21 C-Atomen enthalten, z. B. Reste von Ethylenglykol; Propandiol-1,3; 2-Ethylpropandiol-1,3; Neopentylglykol; Pentandiol-1,5; Hexandiol-1,6; Cyclohexandimethanol-1,4; 3-Methylpentandiol-2,4; 2-Methylpentandiol-2,4; 2,2,4-Trimethylpentandiol-1,3; 2-Ethylhexandiol-1,3; 2,2-Diethylpropandiol-1,3; Hexandiol-2,5;1,4-Di-([beta]-hydroxyethoxy)-benzol; 2,2-Bis-(4-hydroxycyclohexyl)-propan; 2,4-Dihydroxy-1,1,3,3-tetramethyl-cyclobutan; 2,2-Bis-(3-[beta]-hydroxyethoxyphenyl)-propan und 2,2-Bis-(4-hydroxypropoxyphenyl)-propan.

Erfindungsgemäß bevorzugt als Komponente A eingesetzte Polyalkylenterephthalate sind auch Copolyester, die aus mindestens zwei der oben genannten Säurekomponenten und/oder aus mindestens zwei der oben genannten Alkoholkomponenten und/oder Butandiol-1,4 hergestellt werden.

Die als Komponente A erfindungsgemäß eingesetzten thermoplastischen Polyester können auch im Gemisch mit anderen Polyestern und/oder weiteren Polymeren eingesetzt werden.

Als Komponente B werden Füllstoffe und/oder Verstärkungsstoffe eingesetzt, bevorzugt Glasfasern. Es können auch Mischungen aus zwei oder mehreren unterschiedlichen Füllstoffen und/oder Verstärkungsstoffen, eingesetzt werden.

Bevorzugte Füllstoffe sind mineralische teilchenförmige Füllstoffe auf der Basis von Talk, Glimmer, Silikat, Quarz, Titandioxid, Wollastonit, Kaolin, amorphe Kieselsäuren, nanoskaligen Mineralien, besonders bevorzugt Montmorilloniten oder Nano-Böhmiten, Magnesiumcarbonat, Kreide, Feldspat, Glaskugeln und/oder Bariumsulfat. Besonders bevorzugt werden mineralische teilchenförmige Füllstoffe auf der Basis von Talk, Wollastonit und/oder Kaolin.

Besonders bevorzugt werden ferner auch nadelförmige mineralische Füllstoffe eingesetzt. Unter nadelförmigen mineralischen Füllstoffen wird erfindungsgemäß ein mineralischer Füllstoff mit stark ausgeprägtem nadelförmigen Charakter verstanden. Bevorzugt sind nadelförmige Wollastonite. Bevorzugt weist das Mineral ein Länge zu Durchmesser - Verhältnis von 2:1 bis 35:1, besonders bevorzugt von 3:1 bis 19:1, insbesondere bevorzugt von 4:1 bis 12:1 auf. Die mittlere Teilchengröße der erfindungsgemäß als Komponente B eingesetzten nadelförmigen mineralischen Füllstoffe liegt bevorzugt bei kleiner 20 µm, besonders bevorzugt bei kleiner 15 µm, insbesondere bevorzugt bei kleiner 10 µm, bestimmt mit einem CILAS Granulometer.

Bei den erfindungsgemäß vorzugsweise eingesetzten Komponenten B handelt es sich um Verstärkungsstoffe. Dabei kann es sich beispielsweise um Verstärkungsstoffe auf der Basis von Kohlenstofffasern und/oder von Glasfasern handeln.

Der Füllstoff und/oder Verstärkungsstoff kann in einer bevorzugten Ausführungsform oberflächenmodifiziert sein, vorzugsweise mit einem Haftvermittler bzw. einem Haftvermittlersystem, besonders bevorzugt auf Silanbasis. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Bei den erfindungsgemäß als Komponente B bevorzugt eingesetzten Glasfasern kann es sich um Kurzglasfasern und/oder um Langglasfasern handeln. Als Kurz- oder Langglasfasern können Schnittfasern eingesetzt werden. Kurzglasfasern können auch in Form von gemahlenen Glasfasern zum Einsatz kommen. Daneben können Glasfasern außerdem in der Form von Endlosfasern eingesetzt werden, beispielsweise in der Form von Rovings, Monofilamenten, Filamentgarnen oder Zwirnen, oder Glasfasern können in der Form von textilen Flächengebilden eingesetzt werden, beispielsweise als Glasgewebe, als Glasgeflecht oder als Glasmatte.

Typische Faserlängen für Kurzglasfasern vor dem Einarbeiten in die Polyestermatrix bewegen sich im Bereich von 0,05 bis 10 mm, vorzugsweise von 0,1 bis 5 mm. Nach dem Einarbeiten in die Polyestermatrix hat sich die Länge der Glasfasern verringert. Typische Faserlängen für Kurzglasfasern nach dem Einarbeiten in die Polyestermatrix bewegen sich im Bereich von 0,01 bis 2 mm, vorzugsweise von 0,02 bis 1 mm.

Die Durchmesser der einzelnen Fasern kann in weiten Bereichen schwanken. Typische Durchmesser der einzelnen Fasern bewegen sich im Bereich von 5 bis 20 µm.

Die Glasfasern können beliebige Querschnittsformen aufweisen, beispielsweise runde, elliptische, n-eckige oder irreguläre Querschnitte. Es können Glasfasern mit mono- oder multilobalen Querschnitten verwendet werden.

Glasfasern können als Endlosfasern oder als geschnittene oder gemahlene Glasfasern eingesetzt werden.

Die Glasfasern selbst, unabhängig von deren Querschnittfläche und deren Länge, können dabei beispielsweise ausgewählt sein aus der Gruppe der E-Glasfasern, A-Glasfasern, C-Glasfasern, D-Glasfasern, M-Glasfasern, S-Glasfasern, R-Glasfasern und/oder ECR-Glasfasern, wobei die E-Glasfasern, R-Glasfasern, S-Glasfasern und ECR-Glasfasern besonders bevorzugt sind. Die Glasfasern sind vorzugsweise mit einer Schlichte versehen, welche vorzugsweise Polyurethan als Filmbildner und Aminosilan als Haftvermittler enthält.

Besonders bevorzugt eingesetzte E-Glasfasern weisen folgende chemische Zusammensetzung auf: SiO₂ 50-56 %; Al₂O₃ 12-16 %; CaO 16-25 %; MgO ≤ 6 %; B₂O₃ 6-13 %; F ≤ 0,7 %; Na₂O 0,3-2 %; K₂O 0,2-0,5 %; Fe₂O₃ 0,3 %.

Besonders bevorzugt eingesetzte R-Glasfasern weisen folgende chemische Zusammensetzung auf: SiO₂ 50-65 %; Al₂O₃ 20-30 %; CaO 6-16 %; MgO 5-20 %; Na₂O 0,3-0,5 %; K₂O 0,05-0,2 %; Fe₂O₃ 0,2-0,4 %, TiO₂ 0,1-0,3 %.

Besonders bevorzugt eingesetzte ECR-Glasfasern weisen folgende chemische Zusammensetzung auf: SiO₂ 57,5-58,5 %; Al₂O₃ 17,5-19,0 %; CaO 11,5-13,0 %; MgO 9,5-11,5.

Die erfindungsgemäß als Komponente C eingesetzten Salze von Diethylphosphinsäure sind bekannte Flammschutzmittel für polymere Formmassen.

Auch Salze von Diethylphosphinsäure mit Anteilen der erfindungsgemäß als Komponenten D und E eingesetzten Phosphinsäure- und Phosphonsäuresalze sind bekannte Flammschutzmittel. Die Herstellung dieser Stoffkombinationen wird z. B. in US 7,420,007 B2 beschrieben.

Die erfindungsgemäß eingesetzten Salze von Diethylphosphinsäure der Komponente C können geringe Mengen an Salzen der Komponente D und an Salzen der Komponente E enthalten, beispielsweise bis zu 10 Gew.-% an Komponente D, vorzugsweise 0,01 bis 6 Gew. %, und insbesondere 0,2 bis 2,5 Gew.-% davon, und bis zu 10 Gew.-% an Komponente E, vorzugsweise 0,01 bis 6 Gew. %, und insbesondere 0,2 bis 2,5 Gew.-% davon bezogen auf die Menge an Komponenten C, D und E.

Die erfindungsgemäß als Komponente E eingesetzten Salze der Ethylphosphonsäure sind als Zusätze zu Diethylphospinaten in Flammschutzmitteln für polymere Formmassen ebenfalls bekannt, beispielsweise aus DE 102007041594 A1.

Die Verwendung der erfindungsgemäß als Komponente F eingesetzten anorganischen Phosphonate oder auch Salze der phosphorigen Säure (Phosphite) sind als Flammschutzmittel ist bekannt. So offenbart WO 2012/045414 A1 Flammschutzmittelkombinationen, die neben Phosphinsäuresalzen auch Salze der phosphorigen Säure (= Phosphite) enthalten.

Bevorzugt entspricht das anorganische Phosphonat (Komponente F) den allgemeinen Formeln (IV) oder (V)

[(HO)PO₂]²⁻_{p/2} Kat^{p+} (IV)

[(HO)₂PO]⁻ₚ Kat^{p+} (V)

worin Kat ein p-wertiges Kation, insbesondere ein Kation eines Alkalimetalls, Erdalkalimetalls, ein Ammoniumkation und/oder ein Kation von Fe, Zn oder insbesondere von Al einschließlich der Kationen Al(OH) oder Al(OH)₂ ist, und p 1, 2, 3 oder 4 bedeutet.

Bevorzugt handelt es sich bei dem anorganischen Phosphonat (Komponente F) um Aluminiumphosphit [Al(H₂PO₃)₃], sekundäres Aluminiumphosphit [Al₂(HPO₃)₃], basisches Aluminiumphosphit [Al(OH)(H₂PO₃)₂*2aq], Aluminiumphosphittetrahydrat [Al₂(HPO₃)₃*4aq], Aluminiumphosphonat, Al₇(HPO₃)₉(OH)₆(1,6-Hexandiamin)_{1,5}*12H₂O, Al₂(HPO₃)³*xAl₂O₃*nH₂O mit x = 2,27 - 1 und/oder Al₄H₆P₁₆O₁₈.

Bei dem anorganischen Phosphonat (Komponente F) handelt es sich bevorzugt auch um Aluminiumphosphite der Formeln (VI), (VII) und/oder (VIII)

Al₂(HPO₃)₃ x (H₂O)_{q} (VI),

wobei q 0 bis 4 bedeutet,

Al_{2,00}M_{z}(HPO₃)_{y}(OH)ᵥ x (H₂O)_{w} (VII),

wobei M Alkalimetallkationen, z 0,01 bis 1,5 und y 2,63 bis 3,5 und v 0 bis 2 und w 0 bis 4 bedeutet,

Al_{2,00}(HPO₃)ᵤ(H₂PO₃)ₜ x (H₂O)ₛ (VIII),

wobei u 2 bis 2,99 und t 2 bis 0,01 und s 0 bis 4 bedeutet,
   und/oder
um Aluminiumphosphit [Al(H2PO₃)₃], um sekundäres Aluminiumphosphit [Al₂(HPO₃)₃], um basisches Aluminiumphosphit [Al(OH)(H₂PO₃)₂*2aq], um Aluminiumphosphittetrahydrat [Al₂(HPO₃)₃*4aq], um Aluminiumphosphonat, um Al₇(HPO₃)₉(OH)₆(1,6-Hexandiamin)_{1,5}*12H₂O, um Al₂(HPO₃)³*xAl₂O₃*nH₂O mit x = 2,27 - 1 und/oder Al₄H₆P₁₆O₁₈.

Bevorzugte anorganische Phosphonate (Komponente F) sind in Wasser unlösliche bzw. schwerlösliche Salze.

Besonders bevorzugte anorganische Phosphonate sind Aluminium-, Calcium- und Zinksalze.

Besonders bevorzugt handelt es sich bei Komponente F um ein Umsetzungsprodukt aus phosphoriger Säure und einer Aluminiumverbindung.

Besonders bevorzugte Komponenten F sind Aluminiumphosphite mit den CAS-Nummern 15099-32-8, 119103-85-4, 220689-59-8, 56287-23-1, 156024-71-4, 71449-76-8 und 15099-32-8.

Die Herstellung der bevorzugt eingesetzten Aluminiumphosphite erfolgt durch Umsetzung einer Aluminiumquelle mit einer Phosphorquelle und wahlweise einem Templat in einem Lösungsmittel bei 20 - 200 °C während einer Zeitspanne bis zu 4 Tagen. Aluminiumquelle und Phosphorquelle werden dazu 1 - 4 h vermischt, unter hydrothermalen Bedingungen oder am Rückfluss erhitzt, abfiltriert, gewaschen und z. B. bei 110 °C getrocknet.

Bevorzugte Aluminiumquellen sind Aluminiumisopropoxid, Aluminiumnitrat, Aluminiumchlorid, Aluminiumhydroxid (z. B. Pseudoböhmit).

Bevorzugte Phosphorquellen sind Phosphorige Säure, (saures) Ammoniumphosphit, Alkaliphosphite oder Erdalkaliphosphite.

Bevorzugte Alkaliphosphite sind Dinatriumphosphit, Dinatriumphosphithydrat, Trinatriumphosphit, Kaliumhydrogenphosphit

Bevorzugtes Dinatriumphosphithydrat ist Brüggolen^{®} H10 der Fa. Brüggemann.

Bevorzugte Template sind 1,6-Hexandiamin, Guanidincarbonat oder Ammoniak.

Bevorzugtes Erdalkaliphosphit ist Calciumphosphit.

Das bevorzugte Verhältnis von Aluminium zu Phosphor zu Lösungsmittel ist dabei 1 : 1 : 3,7 bis 1 : 2,2 : 100 mol. Das Verhältnis von Aluminium zu Templat ist 1 : 0 bis 1 : 17 mol. Der bevorzugte pH-Wert der Reaktionslösung ist 3 bis 9. Bevorzugtes Lösungsmittel ist Wasser.

Besonders bevorzugt wird in der Anwendung das gleiche Salz der Phosphinsäure wie der phosphorigen Säure verwendet, also z. B. Aluminiumdiethylphosphinat zusammen mit Aluminiumphosphit oder Zinkdiethylphosphinat zusammen mit Zinkphosphit.

In einer bevorzugten Ausführungsform enthalten die oben beschriebenen flammhemmenden Polyesterzusammensetzungen als Komponente F eine Verbindung der Formel (III) 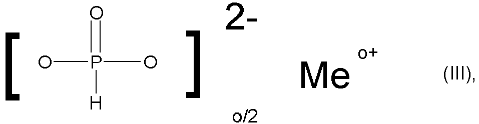
worin Me Fe, TiOᵣ, Zn oder insbesondere Al ist,
o 2 bis 3, vorzugsweise 2 oder 3, bedeutet, und
r = (4 - o) / 2 ist.

Bevorzugt eingesetzte Verbindungen der Formel III sind solche, worin Me^{o+} Zn²⁺, Fe³⁺ oder insbesondere Al³⁺ bedeuten.

In einer weiteren bevorzugten Ausführungsform liegen Komponenten C, D, E, F, H und I in Teilchenform vor, wobei die mittlere Teilchengröße (d₅₀) 1 bis 100 µm beträgt.

Bei den erfindungsgemäß als Komponente G zugesetzten Wachsen handelt es sich um an sich bekannte Verbindungen; diese werden ausgewählt aus der Gruppe der Polyolefinwachse, Amidwachse, natürlichen Wachse, langkettigen aliphatischen Carbonsäuren (Fettsäuren) und/oder deren Estern oder Salzen.

Die erfindungsgemäß als Komponente G eingesetzten Wachse können sowohl als solche oder in polar modifizierter Form eingesetzt werden. Eine polare Modifizierung lässt sich beispielsweise durch Oxidation mit Luft oder mit sauerstoff-haltigen Gasen oder durch Aufpfropfung von z. B. ungesättigten Carbonsäuren wie etwa Maleinsäure erreichen. Beispiele für die oxidative Modifizierung finden sich in EP 0 890 583 A1. Beispiele für die Modifizierung mit ungesättigten Carbonsäuren finden sich in EP 0 941 257 B1.

Es können auch Gemische unterschiedlicher Wachse eingesetzt werden.

Beispiele für erfindungsgemäß als Komponente G eingesetzte Polyolefinwachse sind solche, die durch die Polymerisation von ein oder mehreren α-Olefinen, insbesondere mit Metallocen-Katalysatoren, erhalten werden können. Beispiele für Metallocene sowie deren Verwendung zur Herstellung von Polyolefinwachsen sind beispielsweise in EP 0 571 882 A2 zu finden.

Bevorzugt als Komponente G eingesetzte Polyolefinwachse sind PE-Wachse, PTFE-Wachse, PP-Wachse, FT-Paraffine, makro-und mikrokristalline Paraffine und polare Polyolefinwachse.

Beispiele für PE-Wachse sind Polyethylen-Homo- und Copolymerwachse, die insbesondere mittels Metallocenkatalyse hergestellt wurden, und die ein zahlenmittleres Molekulargewicht von 700 bis 10.000 g/mol bei einem Tropfpunkt zwischen 80 und 140 °C aufweisen.

Beispiele für PTFE-Wachse sind Polytetrafluoroethylene mit einem Molekulargewicht zwischen 30.000 und 2.000. 000 g/mol, insbesondere zwischen 100.000 und 1.000.000 g/mol.

Beispiele für PP-Wachse sind Polypropylen-Homo-und Copolymerwachse, die insbesondere mittels Metallocenkatalyse hergestellt wurden, und die ein zahlenmittleres Molekulargewicht von 700 bis 10.000 g/mol bei einem Tropfpunkt zwischen 80 und 160 °C aufweisen.

Beispiele für FT-Wachse sind Fischer-Tropsch-Paraffine (FT-Paraffine) mit einem zahlenmittleren Molekulargewicht von 400 bis 800 g/mol bei einem Tropfpunkt von 80 bis 125 °C.

Beispiele für makro-und mikrokristalline Paraffine sind Paraffine und mikrokristalline Wachse, welche bei der Erdölraffination anfallen. Die Tropfpunkte solcher Paraffine liegen vorzugsweise zwischen 45 und 65 °C, die solcher mikrokristallinen Wachse vorzugsweise zwischen 73 und 100 °C.

Beispiele für polare Polyolefinwachse sind Verbindungen, die durch Oxidation von Ethylen-oder Propylen-Homopolymer-und-Copolymerwachsen oder durch deren Pfropfung mit Maleinsäureanhydrid herstellbar sind. Besonders bevorzugt werden hierfür Polyolefinwachse mit einem Tropfpunkt zwischen 90 und 165 °C, insbesondere zwischen 100 und 160 °C, einer Schmelzviskosität bei 140 °C (Polyethylenwachse) oder bei 170 °C (Polypropylenwachse) zwischen 10 und 10000 mPas, insbesondere zwischen 50 und 5000 mPas, und einer Dichte bei 20 °C zwischen 0,85 und 0,96 g/cm³.

Besonders bevorzugt als Komponente G eingesetzte Wachse sind Amidwachse. Dabei handelt es sich um Wachse, die herstellbar sind durch Umsetzung von Ammoniak oder Alkylendiamin, wie Ethylendiamin oder Hexamethylendiamin, mit gesättigten und/oder ungesättigten Fettsäuren. Bei den Fettsäuren handelt es sich um langkettige Carbonsäuren mit 14 bis 40 Kohlenstoffatomen, beispielsweise um Stearinsäure, Talgfettsäure, Palmitinsäure oder Erucasäure.

Weitere bevorzugt als Komponente G eingesetzte Wachse sind natürliche Wachse. Dabei handelt es sich beispielsweise um Carnaubawachs oder Candelillawachs.

Weitere bevorzugt als Komponente G eingesetzte Wachse sind langkettige aliphatische Carbonsäuren (Fettsäuren) und/oder deren Ester oder Salze, wobei die aliphatischen Carbonsäuren Kettenlängen von C₁₄ bis C₄₀ aufweisen.

Beispiele für Säure- und Esterwachse sind Montanwachse. Diese enthalten Fettsäuren und deren Ester mit einer Kohlenstoffkettenlänge der Carbonsäure von C₂₂ bis C₃₆.

Bevorzugte Esterwachse sind Umsetzungsprodukte von Montanwachssäuren mit ein- oder mehrwertigen Alkoholen mit 2 bis 6 C-Atomen, wie zum Beispiel Ethandiol, Butan-1, 3-diol, Propan-1,2, 3-triol oder Pentaerythrit.

Weitere Beispiele für bevorzugt eingesetzte Esterwachse sind Sorbitanester. Dabei handelt es sich um Umsetzungsprodukte von Sorbit (Sorbitol) mit gesättigten und/oder ungesättigten Fettsäuren und/oder Montansäuren, beispielsweise mit Stearinsäure, Talgfettsäure, Palmitinsäure oder Erucasäure.

Besonders bevorzugt als Komponente G eingesetzte Wachse sind Ester oder Salze von langkettigen aliphatischen Carbonsäuren (Fettsäuren), die Kettenlängen von C₁₄ bis C₄₀ aufweisen. Bei den Estern handelt es sich um Umsetzungsprodukte der genannten Carbonsäuren mit gebräuchlichen mehrwertigen Alkoholen, wie z. B. Ethylenglykol, Glycerin, Trimethylolpropan oder Pentaerythrit. Als Salze der genannten Carbonsäuren kommen vor allem Alkali-, Erdalkali-, Aluminium- oder Zinksalze in Betracht.

Ganz besonders bevorzugt handelt es sich bei der Komponente G um Ester oder Salze der Stearinsäure, wie z. B. um Glycerinmonostearat oder Pentaerythrittetrastearat oder um Calcium-, Aluminium- oder Zinkstearat.

Ganz besonders bevorzugt handelt es sich bei der Komponente G um Umsetzungsprodukte von Montanwachssäuren mit Alkylenglykol, insbesondere mit Ethylenglykol.

Davon sind insbesondere bevorzugt Mischungen aus Ethylenglykol-Mono-Montanwachssäureester, Ethylenglykol-Di-Montanwachssäureester, Montanwachssäuren und Ethylenglykol.

Ebenfalls besonders bevorzugt handelt es sich bei der Komponente G um Umsetzungsprodukte von Montanwachssäuren mit einem Calcium-, Aluminium- oder Zinksalz.

Besonders bevorzugt handelt es sich bei den Umsetzungsprodukten um eine Mischung aus 1,3-Budandiol-Mono-Montanwachssäureester, 1,3-Budandiol-Di-Montanwachssäureester, Montanwachssäuren, 1,3-Butandiol, Calciummontanat und dem Calciumsalz.

In einer weiteren besonders bevorzugten Ausführungsform handelt es sich bei Komponente G um Alkali-, Erdalkali-, Aluminium- und/oder Zinksalze von langkettigen Fettsäuren mit 14 bis 40 C-Atomen und/oder um Umsetzungsprodukte von langkettigen Fettsäuren mit 14 bis 40 C-Atomen mit mehrwertigen Alkoholen, wie Ethylenglykol, Glycerin, Trimethylolpropan und/oder Pentaerythrit.

Die erfindungsgemäßen Polyesterzusammensetzungen können als Komponente J noch weitere Additive enthalten. Bevorzugte Komponenten J im Sinne der vorliegenden Erfindung sind Antioxidantien, UV-Stabilisatoren, Gammastrahlenstabilisatoren, Hydrolysestabilisatoren, Co-Stabilisatoren für Antioxidantien, Antistatika, Emulgatoren, Nukleierungsmittel, Weichmacher, Verarbeitungs-hilfsmittel, Schlagzähmodifikatoren, Farbstoffe, Pigmente und/oder weitere Flammschutzmittel, die sich von Komponenten C, D, E, F, H und I unterscheiden.

Hierzu gehören insbesondere Phosphate, wie etwa Melamin-Poly(Metallphosphate). Bevorzugte Metalle hierfür sind die Elemente der 2. Hauptgruppe, der 3. Hauptgruppe, der 2. Nebengruppe, der 4. Nebengruppe und der Nebengruppe VIIIa des Periodensystems sowie Cer und/oder Lanthan.

Melamin-Poly(Metallphosphate) sind bevorzugt Melamin-Poly(Zinkphosphate), Melamin-Poly(Magnesiumphosphate) und/oder Melamin-Poly(Calciumphosphate).

Bevorzugt sind (Melamin)₂Mg(HPO₄)₂, (Melamin)₂Ca(HPO₄)₂, (Melamin)₂Zn(HPO4)₂, (Melamin)₃Al(HPO₄)₃, (Melamin)₂Mg(P₂O₇), (Melamin)₂Ca(P₂O₇), (Melamin)₂Zn(P₂O₇), (Melamin)₃Al(P₂O₇)_{3/2}.

Bevorzugt sind Melamin-Poly(Metallphosphate), die bekannt sind als Hydrogenphosphato- oder Pyrophosphato-Metallate mit Komplex-Anionen, die ein vier- oder sechsbindiges Metallatom als Koordinationszentrum mit zweizähnigen Hydrogenphosphat- oder Pyrophosphat-Liganden aufweisen.

Bevorzugt sind auch Melamin-interkalierte Aluminium-, Zink- oder Magnesium-Salze von kondensierten Phosphaten, ganz besonders bevorzugt sind Bis-Melamin-zinkodiphosphat und/oder Bis-Melamin-alumotriphosphat.

Bevorzugt sind weiterhin Salze der Elemente der 2. Hauptgruppe, der 3. Hauptgruppe, der 2. Nebengruppe, der 4. Nebengruppe und der Nebengruppe VIIIa des Periodensystems sowie von Cer und/oder Lanthan mit Anionen der Oxosäuren der fünften Hauptgruppe (Phosphate, Pyrophosphate und Polyphosphate).

Bevorzugt sind Aluminiumphosphate, Aluminum monophosphate; Aluminumorthophosphate (AlPO₄), Aluminumhydrogenphosphat (Al₂(HPO₄)₃) und/oder Aluminiumdihydrogenphosphat

Bevorzugt sind auch Calciumphosphat, Zinkphosphat, Titanphosphat und/oder Eisenphosphat

Bevorzugt sind Calciumhydrogenphosphat, Calciumhydrogenphosphatdihydrat, Magnesiumhydrogenphosphat, Titaniumhydrogenphosphat (TIHC) und/oder Zinkhydrogenphosphat

Bevorzugt sind Aluminiumdihydrogenphosphat, Magnesiumdihydrogenphosphat, Calciumdihydrogenphosphat, Zinkdihydrogenphosphat, Zinkdihydrogenphosphat dihydrat und/oder Aluminumdihydrogenphosphat.

Besonders bevorzugt sind Calciumpyrophosphat, Calciumdihydrogenpyrophosphat, Magnesiumpyrophosphat Zinkpyrophosphat und/oder Aluminiumpyrophosphat.

Die vorgenannten sowie andere und ähnliche Phosphate werden beispielsweise durch die Firma J.M. Huber Corporation, USA, unter Safire^{®} Products angeboten, hierzu gehören etwa die Typen APP Type II, AMPP, MPP, MPyP, PiPyP. PPaz, Safire^{®} 400, Safire^{®} 600, EDAP und andere.

Weitere Phosphate sind beispielsweise in der JP-A-2004204194, der DE-A-102007036465 und der EP-A-3133112 genannt und gehören ausdrücklich zu den vorgenannten einsetzbaren Komponenten.

Die weiteren Additive sind als Zusätze zu Polyesterzusammensetzungen an sich bekannt und können alleine oder in Mischung oder in Form von Masterbatches eingesetzt werden.

Die vorgenannten Komponenten A, B, C, D, E, F, G und gegebenenfalls H, I und J können in den verschiedensten Kombinationen zur erfindungsgemäßen flammgeschützten Polyesterzusammensetzung verarbeitet werden. So ist es möglich, bereits zu Beginn oder am Ende der Polykondensation oder in einem folgenden Compoundierprozess die Komponenten in die Polyesterschmelze einzumischen. Weiterhin gibt es Verarbeitungsprozesse bei denen einzelne Komponenten erst später zugefügt werden. Dies wird insbesondere beim Einsatz von Pigment- oder Additivmasterbatches praktiziert. Außerdem besteht die Möglichkeit, insbesondere pulverförmige Komponenten auf das durch den Trocknungsprozess eventuell warme Polymergranulat aufzutrommeln.

Auch können zwei oder mehrere der Komponenten der erfindungsgemäßen Polyesterzusammensetzungen vor dem Einbringen in die Polyestermatrix durch Vermischen kombiniert werden. Dabei können herkömmliche Mischaggregate eingesetzt werden, in denen die Komponenten in einem geeigneten Mischer, z. B. 0,01 bis 10 Stunden bei 0 bis 300 °C gemischt werden.

Aus zwei oder mehreren der Komponenten der erfindungsgemäßen Polyesterzusammensetzungen können auch Granulate hergestellt werden, die anschließend in die Polyestermatrix eingebracht werden können.

Dazu können zwei oder mehr Komponenten der erfindungsgemäßen Polyesterzusammensetzung mit Granulierhilfsmittel und/oder Bindemittel in einem geeigneten Mischer oder einem Granulierteller zu Granulaten verarbeitet werden.

Das zunächst entstehende Rohprodukt kann in einem geeigneten Trockner getrocknet beziehungsweise zum weiteren Kornaufbau getempert werden.

Die erfindungsgemäße Polyesterzusammensetzung oder zwei oder mehrere Komponenten davon kann in einer Ausführungsform durch Rollkompaktierung hergestellt werden.

Die erfindungsgemäße Polyesterzusammensetzung oder zwei oder mehrere Komponenten davon kann in einer Ausführungsform dadurch hergestellt werden, dass die Inhaltsstoffe gemischt, stranggepresst, abgeschlagen (bzw. gegebenenfalls gebrochen und klassiert) und getrocknet (und gegebenenfalls gecoated) werden.

Die erfindungsgemäße Polyesterzusammensetzung oder zwei oder mehrere Komponenten davon kann in einer Ausführungsform durch Sprühgranulierung hergestellt werden.

Die erfindungsgemäße flammgeschützte Polymerformmasse liegt bevorzugt in Granulatform, z. B. als Extrudat oder als Compound, vor. Das Granulat hat bevorzugt Zylinderform mit kreisförmiger, elliptischer oder unregelmäßiger Grundfläche, Kugelform, Kissenform, Würfelform, Quaderform, Prismenform.

Typische Längen-zu-Durchmesser-Verhältnis des Granulates betragen 1 zu 50 bis 50 zu 1, bevorzugt 1 zu 5 bis 5 zu 1.

Das Granulat hat bevorzugt einen Durchmesser von 0,5 bis 15 mm, besonders bevorzugt von 2 bis 3 mm und bevorzugt eine Länge von 0,5 bis 15mm, besonders bevorzugt von 2 bis 5 mm.

Gegenstand der Erfindung sind auch Formteile hergestellt aus der oben beschriebenen flammhemmenden Polyesterzusammensetzung enthaltend die

Komponenten A, B, C, D, E, F und G und gegebenenfalls die Komponente(n) H, I und J.

Bei den erfindungsgemäßen Formteilen kann es sich um beliebige Ausformungen handeln. Beispiele dafür sind Fasern, Folien oder Formkörper, erhältlich aus den erfindungsgemäßen flammgeschützten Polyesterformmassen durch beliebige Formverfahren, insbesondere durch Spritzguss oder Extrusion.

Die Herstellung der erfindungsgemäßen flammgeschützten Polyester-Formkörper kann durch beliebige Formverfahren erfolgen. Beispiele dafür sind Spritzgießen, Pressen, Schaumspritzgießen, Gasinnendruck-Spritzgießen, Blasformen, Foliengießen, Kalandern, Laminieren oder Beschichten bei höheren Temperaturen mit der flammgeschützten Polyester-Formmasse.

Bei den Formteilen handelt es sich vorzugsweise sich um Spritzgussteile oder um Extrusionsteile.

Die erfindungsgemäßen flammgeschützten Polyesterzusammensetzungen eignen sich zur Herstellung von Fasern, Folien und Formkörpern, insbesondere für Anwendungen im Elektro- und Elektronikbereich.

Die Erfindung betrifft bevorzugt die Verwendung der erfindungsgemäßen flammgeschützten Polyesterzusammensetzungen in oder für Steckverbinder, stromberührten Teilen in Stromverteilern (FI-Schutz), Platinen, Vergussmassen, Stromsteckern, Schutzschaltern, Lampengehäusen, LED Gehäusen, Kondensatorgehäusen, Spulenkörpern und Ventilatoren, Schutzkontakten, Steckern, in/auf Platinen, Gehäusen für Stecker, Kabeln, flexiblen Leiterplatten, Ladekabeln für Handys, Motorabdeckungen oder Textilbeschichtungen.

Die Erfindung betrifft ebenfalls bevorzugt die Verwendung der erfindungsgemäßen flammgeschützten Polyesterzusammensetzungen zur Herstellung von Formkörpern in Form von Bauteilen für den Elektro/Elektronikbereich, insbesondere für Teile von Leiterplatten, Gehäusen, Folien, Leitungen, Schaltern, Verteilern, Relais, Widerständen, Kondensatoren, Spulen, Lampen, Dioden, LED, Transistoren, Konnektoren, Reglern, Speichern und Sensoren, in Form von großflächigen Bauteilen, insbesondere von Gehäuseteilen für Schaltschränke und in Form aufwendig gestalteter Bauteile mit anspruchsvoller Geometrie.

Die Wandstärke der erfindungsgemäßen Formkörper kann typischerweise bis zu 10 mm betragen. Besonders geeignet sind Formkörper mit weniger als 1,5 mm Wandstärke, mehr bevorzugt von weniger als 1 mm Wandstärke und besonders bevorzugt von weniger als 0,5 mm Wandstärke.

Die nachfolgenden Beispiele erläutern die Erfindung ohne diese zu begrenzen.

### 1. Eingesetzte Komponenten

Handelsübliche Polyester (Komponente A):
   Polybutylenterephthalat (PBT): Ultradur^{®} 4500 (BASF)
   Polyethylenterephthalat (PET): Polyclear^{®} 1100 (Invista)
   Glasfasern (Komponente B):
      Glasfasern Vectrotex^{®} EC 10 P 952 (Fa. Vectrotex, FR)
   Flammschutzmittel FM 1 (Komponenten C, D und E):
      Aluminiumsalz der Diethylphosphinsäure enthaltend 0,9 mol-% an Aluminium-Ethylbutylphosphinat und 0,5 mol-% an Aluminium-Ethylphosphonat hergestellt nach Beispiel 3 der US 7,420,007 B2
   Flammschutzmittel FM 2 (Komponenten C, D und E):
      Aluminiumsalz der Diethylphosphinsäure enthaltend 2,7 mol-% an Aluminium-Ethylbutylphosphinat und 0,8 mol-% an Aluminium-Ethylphosphonat hergestellt nach Beispiel 4 der US 7,420,007 B2
   Flammschutzmittel FM 3 (Komponenten C, D und E):
      Aluminiumsalz der Diethylphosphinsäure enthaltend 0,5 mol-% an Aluminium-Ethylbutylphosphinat und 0,05 mol-% an Aluminium-Ethylphosphonat hergestellt nach dem Verfahren gemäß US 7,420,007 B2
   Flammschutzmittel FM 4 (Komponenten C, D und E):
      Aluminiumsalz der Diethylphosphinsäure enthaltend 10 mol-% an Aluminium-Ethylbutylphosphinat und 5 mol-% an Aluminium-Ethylphosphonat hergestellt nach dem Verfahren gemäß US 7,420,007 B2
   Flammschutzmittel FM 5 (Komponente C):
      Aluminiumsalz der Diethylphosphinsäure hergestellt in Analogie zu Beispiel 1 der DE 196 07 635 A1
   Flammschutzmittel FM 6 (Komponenten C und E):
      Aluminiumsalz der Diethylphosphinsäure enthaltend 8,8 mol-% an Aluminium-Ethylphosphonat
   Flammschutzmittel FM 7 (Komponente F):
      Aluminiumsalz der Phosphonsäure hergestellt nach Beispiel 1 der DE 102011120218 A1
   Flammschutzmittel FM 8 (Komponente F):
      Aluminiumsalz der Phosphorigen Säure
   Flammschutzmittel FM 9 (Komponente H):
      Melamin-Polyphosphat hergestellt nach dem Beispiel der WO2000/002869 A1
   Flammschutzmittel FM 10 (Komponente I):
      Melamincyanurat, Melapur^{®} MC (BASF)
   Wachs 1 (Komponente G):
      Licomont^{®} CaV 102 (Ca-Salz der Montanwachssäure), Fa. Clariant Produkte (Deutschland) GmbH
   Wachs 2 (Komponente G):
      Licowax^{®} E (Ester der Montanwachssäure), Fa. Clariant Produkte (Deutschland) GmbH

### 2. Herstellung, Verarbeitung und Prüfung von flammhemmenden PolyesterFormmassen

Die Flammschutzmittelkomponenten wurden in dem in den Tabellen angegebenen Verhältnissen mit dem Polymergranulat und dem Wachs vermischt und auf einem Doppelschnecken-Extruder (Typ Leistritz ZSE 27 HP-44D) bei Temperaturen von 240 bis 280 °C eingearbeitet. Die Glasfasern wurden über einen Seiteneinzug zugegeben. Der homogenisierte Polymerstrang wurde abgezogen, im Wasserbad gekühlt und anschließend granuliert.

Nach ausreichender Trocknung wurden die Formmassen auf einer Spritzgießmaschine (Typ Arburg 320 C/KT) bei Massetemperaturen von 260 bis 280 °C zu Prüfkörpern verarbeitet und anhand des UL 94-Tests (Underwriter Laboratories) auf Flammwidrigkeit geprüft und klassifiziert. Neben der Klassifikation wurde auch die Nachbrennzeit angegeben.

Der Comparative Tracking Index der Formteile wurde gemäß dem International Electrotechnical Commission Standard IEC-60112/3 ermittelt.

Der Glow Wire Flammability Index (GWFI-Index) wurde nach der Norm IEC-60695-2-12 ermittelt.

Die Glühdrahtentzündungstemperatur (Glow Wire Ignition Temperature; GWIT-Index) wurde nach der Norm IEC-60695-2-13 ermittelt.

Bei der GWFI-Prüfung wird an 3 Prüfkörpern (beispielsweise an Platten der Geometrie 60 x 60 x 1,5 mm) mit Hilfe eines glühenden Drahtes bei Temperaturen zwischen 550 und 960 °C die maximale Temperatur ermittelt, bei der eine Nachbrennzeit von 30 Sekunden nicht überschritten wird und die Probe nicht brennend abtropft. Bei der GWIT-Prüfung wird bei einer vergleichbaren Messprozedur die Glühdrahtentzündungstemperatur angegeben, die 25 K (30K zwischen 900 °C und 960 °C) höher ist als die maximale Glühdrahttemperatur, die in 3 aufeinander folgenden Tests auch während der Einwirkzeit des Glühdrahtes nicht zur Entzündung führt. Als Entzündung gilt dabei eine Flamme mit Brennzeit ≥ 5 sec.

Die Beschaffenheit der Oberfläche des Formteils wurde visuell beurteilt.

Sämtliche Versuche der jeweiligen Serie wurden, falls keine anderen Angaben gemacht wurden, aufgrund der Vergleichbarkeit unter identischen Bedingungen (wie Temperaturprogramme, Schneckengeometrien und Spritzgießparameter) durchgeführt.

### Beispiele 1 - 6 und Vergleichsbeispiele V1-V10 mit PBT

Die Ergebnisse der Versuche mit PBT-Formmassen sind in den in der nachfolgenden Tabelle aufgeführten Beispielen aufgelistet. Alle Mengen sind als Gew.-% angegeben und beziehen sich auf die PBT-Formmasse einschließlich der Flammschutzmittel, Additive und Verstärkungsstoffe.

**Tabelle 1: PA 6.6 GF 30 Versuchsergebnisse (1-6 erfindungsgemäß; 1a, 1b und V1-V10 Vergleiche)**

| Beispiel Nr. | 1 | 1a | 1b | V1 | 2 | V2 | 3 | V3 | 4 | V4 | 5 | V5 | 6 | V6 | V7 | V8 | V9 | V10 |
|---|---|---|---|---|---|---|---|---|---|---|---|---|---|---|---|---|---|---|
| A: PBT | 51,3 | 51,8 | 51,8 | 51,5 | 51,3 | 51,5 | 51,3 | 51,5 | 51,3 | 51,5 | 53,78 | 53,98 | 51,3 | 51,5 | 51,3 | 51,8 | 47,8 | 51,3 |
| B: Glasfasern EC10 | 30 | 30 | 30 | 30 | 30 | 30 | 30 | 30 | 30 | 30 | 30 | 30 | 30 | 30 | 30 | 30 | 30 | 30 |
| C+D+E: FM 1 | 18 | 12 | 12 | 18 | - | - | - | - | - | - | - | - | - | - | - | - | - | - |
| C+D+E: FM 2 | - | - | - | - | 18 | 18 | - | - | - | - | 16 | 16 | 18 | 18 | - | 18 | 22 | - |
| C+D+E: FM 3 | - | - | - | - | - | - | 18 | 18 | - | - | - | - | - | - | - | - | - | - |
| C+D+E: FM 4 | - | - | - | - | - | - | - | - | 18 | 18 | - | - | - | - | - | - | - | - |
| C: FM 5 | - | - | - | - | - | - | - | - | - | - | - | - | - | - | - | - | - | 18 |
| C+E: FM 6 | - | - | - | - | - | - | - | - | - | - | - | - | - | - | 18 | - | - | - |
| F: FM 7 | - | - | - | - | - | - | - | - | - | - | 0,02 | 0,02 | - | - | - | - | - | - |
| F: FM 8 | 0,5 | - | - | 0,5 | 0,5 | 0,5 | 0,5 | 0,5 | 0,5 | 0,5 | - | - | 0,5 | 0,5 | 0,5 | - | - | 0,5 |
| H: FM 9 | - | 6 | - | - | - | - | - | - | - | - | - | - | - | - | - | - | - | - |
| I: FM 10 | - | - | 6 | - | - | - | - | - | - | - | - | - | - | - | - | - | - | - |
| G: Wachs 1 | 0,2 | 0,2 | 0,2 | - | 0,2 | - | 0,2 | - | 0,2 | - | 0,2 | - | - | - | 0,2 | 0,2 | 0,2 | 0,2 |
| G: Wachs 2 | - | - | - | - | - | - | - | - | - | - | - | - | 0,2 | - | - | - | - | - |
| UL 94 0,4mm/[sek.] | V-0/20 | V-0/21 | V-0/24 | V-0/20 | V-0/15 | V-0/15 | V-0/35 | V-0/35 | V-0/20 | V-0/20 | V-0/05 | V-0/05 | V-0/10 | V-0/10 | V-0/40 | V-2/90 | V-1/75 | V-0/45 |
| GWFI [°C] | 960 | 960 | 960 | 960 | 960 | 960 | 960 | 960 | 960 | 960 | 960 | 960 | 960 | 960 | 960 | 850 | 900 | 960 |
| GWIT [°C] | 750 | 750 | 750 | 750 | 750 | 750 | 750 | 750 | 750 | 750 | 750 | 725 | 750 | 700 | 750 | 700 | 725 | 750 |
| CTI [Volt] | 600 | 600 | 600 | 500 | 600 | 500 | 600 | 500 | 600 | 500 | 600 | 500 | 550 | 500 | 500 | 600 | 600 | 500 |
| Oberfläche | glatt | glatt | glatt | rauh^{*)} | glatt | rauh^{*)} | glatt | rauh^{*)} | glatt | rauh^{*)} | glatt | rauh^{*)} | glatt | rauh^{*)} | Glatt | glatt | glatt | glatt |

| | | | | | | | | | | | | | | | | | | |
|---|---|---|---|---|---|---|---|---|---|---|---|---|---|---|---|---|---|---|
| ^{*)} massive Probleme beim Entformen des Formteils aus der Form | | | | | | | | | | | | | | | | | | |

Die erfindungsgemäßen Polyesterzusammensetzungen der Beispiele 1 bis 6 sind Formmassen, welche die Brandklasse UL 94 V-0 bei 0,4 mm erreichen, gleichzeitig CTI 600 Volt bzw. 550 Volt, GWFI 960 °C sowie GWIT 750 °C aufweisen, und glatte Oberflächen besitzen. Der Austausch von Wachs 2 durch Wachs 1 bewirkte eine Vergrößerung des CTI-Wertes. Die hergestellten Formteile konnten problemlos entformt werden. Der Zusatz einer weiteren Komponente F in Beispiel 5 führt zu einer nochmaligen Verbesserung des Flammschutzes ausgedrückt durch eine verringerte Nachbrennzeit.

Das Weglassen von Komponente G in Vergleichsbeispielen V1 bis V6 führte zu Formteilen mit rauhen Oberflächen, die sich darüber hinaus nur unter Schwierigkeiten entformen ließen. Flammfestigkeit und GWFI-Werte entsprachen den Werten für die Formteile, welche Komponente G enthielten. Die CTI-Werte verringerten sich im Vergleich zu den Formteilen, welche Komponente G enthielten.

Das Weglassen von Komponente D in Vergleichsbeispiel V7 hatte neben einer verlängerten Nachbrennzeit einen im Vergleich zu den Beispielen 1-4 verringerten CTI-Wert zur Folge.

Das Weglassen von Komponente F in Vergleichsbeispiel V8 hatte neben einer im Vergleich zu Beispiel 2 Verschlechterung der Brandschutzklasse verringerte GWFI- und GWIT-Werte zur Folge.

In Vergleichsbeispiel V9 wurde durch Erhöhung der Konzentration an Komponenten C, D und E im Vergleich zu Beispiel V8 zwar eine Verbesserung der Brandschutzklasse erreicht. Allerdings zeigte diese Polyesterzusammensetzung immer noch eine im Vergleich zu Beispiel 2 geringere Brandschutzklasse sowie verringerte GWFI- und GWIT-Werte.

Das Weglassen von Komponenten D und E in Vergleichsbeispiel V10 hatte neben einer verlängerten Nachbrennzeit einen im Vergleich zu den Beispielen 1-4 verringerten CTI-Wert zur Folge.

### Beispiele 7-12 und Vergleichsbeispiele V11-V20 mit PET

Die Ergebnisse der Versuche mit PET-Formmassen sind in den in der nachfolgenden Tabelle aufgeführten Beispielen aufgelistet. Alle Mengen sind als Gew.-% angegeben und beziehen sich auf die Polyester-Formmasse einschließlich der Flammschutzmittel, Additive und Verstärkungsstoffe.

**Tabelle 2: PET GF 30 Versuchsergebnisse (7-12 erfindungsgemäß; V11-V20 Vergleiche)**

| Beispiel Nr. | 7 | V11 | 8 | V12 | 9 | V13 | 10 | V14 | 11 | V15 | 12 | V16 | V17 | V18 | V19 | V20 |
|---|---|---|---|---|---|---|---|---|---|---|---|---|---|---|---|---|
| A: PET | 57,3 | 57,5 | 57,3 | 57,5 | 57,3 | 57,5 | 57,3 | 57,5 | 57,3 | 57,5 | 57,3 | 57,5 | 57,3 | 57,8 | 52,8 | 57,3 |
| B: Glasfasern EC10 | 30 | 30 | 30 | 30 | 30 | 30 | 30 | 30 | 30 | 30 | 30 | 30 | 30 | 30 | 30 | 30 |
| C+D+E: FM 1 | 12 | 12 | - | - | - | - | - | - | - | - | - | - | - | - | - | - |
| C+D+E: FM 2 | - | - | 12 | 12 | - | - | - | - | 10 | 10 | 12 | 12 | - | 12 | 17 | - |
| C+D+E: FM 3 | - | - | - | - | 12 | 12 | - | - | - | - | - | - | - | - | - | - |
| C+D+E: FM 4 | - | - | - | - | - | - | 12 | 12 | - | - | - | - | - | - | - | - |
| C: FM 5 | - | - | - | - | - | - | - | - | - | - | - | - | - | - | - | 12 |
| C+E: FM 6 | - | - | - | - | - | - | - | - | - | - | - | - | 12 | - | - | - |
| F: FM 7 | - | - | - | - | - | - | - | - | 2 | 2 | - | - | - | - | - | - |
| F: FM 8 | 0,5 | 0,5 | 0,5 | 0,5 | 0,5 | 0,5 | 0,5 | 0,5 | 0,5 | 0,5 | 0,5 | 0,5 | 0,5 | - | - | 0,5 |
| G: Wachs 1 | 0,2 | - | 0,2 | - | 0,2 | - | 0,2 | - | 0,2 | - | - | - | 0,2 | 0,2 | 0,2 | 0,2 |
| G: Wachs 2 | - | - | - | - | - | - | - | - | - | - | 0,2 | - | - | - | - | - |
| UL 94 0,4mm / [sek.] | V-0/18 | V-0/18 | V-0/12 | V-0/12 | V-0/32 | V-0/32 | V-0/16 | V-0/16 | V-0/03 | V-0/03 | V-0/08 | V-0/08 | V-0/35 | V-2/85 | V-1/70 | V-0/39 |
| GWFI [°C] | 960 | 960 | 960 | 960 | 960 | 960 | 960 | 960 | 960 | 960 | 960 | 960 | 960 | 850 | 900 | 960 |
| GWIT [°C] | 775 | 750 | 775 | 750 | 800 | 750 | 750 | 675 | 750 | 750 | 775 | 750 | 750 | 725 | 750 | 750 |
| CTI [Volt] | 600 | 500 | 600 | 500 | 600 | 500 | 600 | 500 | 600 | 500 | 550 | 500 | 500 | 600 | 600 | 500 |
| Oberfläche | Glatt | rauh^{*)} | glatt | rauh^{*)} | glatt | rauh^{*)} | glatt | rauh^{*)} | glatt | rauh^{*)} | glatt | rauh^{*)} | glatt | glatt | glatt | Glatt |

| | | | | | | | | | | | | | | | | |
|---|---|---|---|---|---|---|---|---|---|---|---|---|---|---|---|---|
| ^{*)} massive Probleme beim Entformen des Formteils aus der Form | | | | | | | | | | | | | | | | |

Die erfindungsgemäßen Polyesterzusammensetzungen der Beispiele 7 bis 12 sind Formmassen, welche die Brandklasse UL 94 V-0 bei 0,4 mm erreichen, gleichzeitig CTI 600 Volt bzw. 550 Volt, GWFI 960 °C bzw. GWIT 750-775 °C aufweisen und glatte Oberflächen besitzen. Der Austausch von Wachs 2 durch Wachs 1 bewirkte eine Vergrößerung des CTI-Wertes. Die hergestellten Formteile konnten problemlos entformt werden. Der Zusatz einer weiteren Komponente F in Beispiel 11 führt zu einer nochmaligen Verbesserung des Flammschutzes ausgedrückt durch eine verringerte Nachbrennzeit.

Das Weglassen von Komponente G in Vergleichsbeispielen V11 bis V16 führte zu Formteilen mit rauhen Oberflächen, die sich darüber hinaus nur unter Schwierigkeiten entformen ließen. Flammfestigkeit, GWFI- und GWIT-Werte entsprachen den Werten für die Formteile, welche Komponente G enthielten. Die CTI-Werte verringerten sich im Vergleich zu den Formteilen, welche Komponente G enthielten.

Das Weglassen von Komponente D in Vergleichsbeispiel V17 hatte neben einer verlängerten Nachbrennzeit einen im Vergleich zu den Beispielen 7-10 verringerten CTI-Wert zur Folge.

Das Weglassen von Komponente F in Vergleichsbeispiel V18 hatte neben einer im Vergleich zu Beispiel 8 Verschlechterung der Brandschutzklasse verringerte GWFI- und GWIT-Werte zur Folge.

In Vergleichsbeispiel V19 wurde durch Erhöhung der Konzentration an Komponenten C, D und E im Vergleich zu Beispiel V18 zwar eine Verbesserung der Brandschutzklasse erreicht. Allerdings zeigte diese Polyesterzusammensetzung immer noch eine im Vergleich zu Beispiel 8 geringere Brandschutzklasse sowie verringerte GWFI- und GWIT-Werte.

Das Weglassen von Komponenten D und E in Vergleichsbeispiel V20 hatte neben einer verlängerten Nachbrennzeit einen im Vergleich zu den Beispielen 7-10 verringerten CTI-Wert zur Folge.

### Beispiele 13-15

Herstellung, Verarbeitung und Prüfung von flammgeschützten PolyesterFormmassen und Polyester-Formkörpern erfolgte wie bei den Beispielen 1-12 und V1-V20 beschrieben. Entsprechend der vorgenannten allgemeinen Vorschrift wurden flammgeschützte Polyesterformmassen und flammgeschützte Polyesterformkörper hergestellt.

Deren Zusammensetzung betrug 51,3 Gew.-%Polybutylenterephthalat (Ultradur^{®} 4500), 30 Gew.-% Glasfasern (Vectrotex^{®} EC 10 P 952), 18 Gew.-% erfindungsgemäß eingesetzte Flammschutzmittel der Komponenten C, D und E entsprechend den nachfolgenden Angaben, 0,5 Gew.-% Aluminiumsalz der Phosphorigen Säure, und 0,2 Gew.-% Wachs (Licowax^{®} E).

Die thermische Beständigkeit der untersuchten Polyesterzusammensetzungen wurde mit Hilfe der Thermogravimetrie (TGA) ermittelt. Die angegebene Temperatur ist die, bei der 2 Gew.-% Gewichtsverlust vorliegen.

Das Verarbeitungsfenster der untersuchten Polyesterzusammensetzungen wurde ebenfalls mit der TGA bestimmt. Gemessen wird dabei der Gewichtsverlust in Gew.-% bei 330 °C nach 1 h. Die TGA wird unter Luft-Atmosphäre durchgeführt.

Da die untere Grenze des Verarbeitungsfensters nicht beeinflusst wird, wird als Maß für das Verarbeitungsfenster die Zersetzung der flammgeschützten Polyesterformmasse an der oberen Grenze bestimmt. Dazu dient der Gewichtsverlust bei einer definierten Temperatur.

### Beispiel 13

Als Flammschutzmittel wurde das oben beschriebene FM 2 eingesetzt, welches aus Komponenten C), D) und E) in der Form von Al-Salzen bestand. Es wurde eine thermische Beständigkeit von 325°C ermittelt und ein Verarbeitungsfenster von 8 %.

### Beispiel 14

Als Flammschutzmittel wurde ein modifiziertes FM 2 eingesetzt, in dem ein Teil der Al-Kationen durch Fe-Kationen ersetzt worden war. Der Gesamtgehalt an Eisen betrug 20 ppm. Es wurde eine thermische Beständigkeit von 335°C ermittelt und ein Verarbeitungsfenster von 5 %.

### Beispiel 15

Als Flammschutzmittel wurde ein modifiziertes FM 2 eingesetzt, in dem ein Teil der Al-Kationen durch Fe-Kationen ersetzt worden war. Der Gesamtgehalt an Eisen betrug 1000 ppm. Es wurde eine thermische Beständigkeit von 375°C ermittelt und ein Verarbeitungsfenster von 4,5 %.

## Patentansprüche

1. Flammhemmende Polyesterzusammensetzungen enthaltend
- 25 bis 95 Gew.-% thermoplastischen Polyester als Komponente A,
- 1 bis 45 Gew.-% Füllstoffe und/oder Verstärkungsstoffe als Komponente B,
- 1 bis 35 Gew.-% Phosphinsäuresalz der Formel (I) als Komponente C 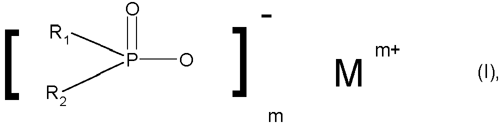
worin R₁ und R₂ Ethyl bedeuten,
M Al, Fe, TiOₚ oder Zn ist,
m 2 bis 3 bedeutet, und
p = (4 - m) /2 ist
- 0,01 bis 3 Gew.-% Verbindung ausgewählt aus der Gruppe der Al-, Fe-, TiOₚ- oder Zn-Salze der Ethylbutylphosphinsäure, der Dibutylphosphinsäure, der Ethylhexylphosphinsäure, der Butylhexylphosphinsäure und/oder der Dihexylphosphinsäure als Komponente D
- 0,001 bis 1 Gew.-% Phosphonsäuresalz der Formel II als Komponente E 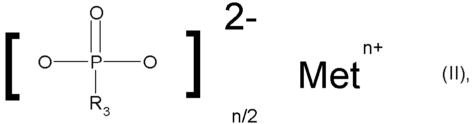
worin R₃ Ethyl bedeutet,
Met Al, Fe, TiO_{q} oder Zn ist,
n 2 bis 3 bedeutet, und
q = (4 - n) / 2 ist
- 0,005 bis 6 Gew.-% anorganisches Phosphonat als Komponente F, und
- 0,05 bis 5 Gew.-% Wachs ausgewählt aus der Gruppe der Polyolefinwachse, Amidwachse, natürlichen Wachse, langkettigen aliphatischen Carbonsäuren mit einer Kettenlänge von C₁₄ bis C₄₀ und/oder deren Estern oder Salzen als Komponente G, wobei die Prozentangaben sich auf die Gesamtmenge der Polyesterzusammensetzung beziehen.

2. Flammhemmende Polyesterzusammensetzungen nach Anspruch 1, **dadurch gekennzeichnet, dass** M und Met Al bedeuten, m und n 3 sind und dass Komponenten D und F Aluminiumsalze sind.

3. Flammhemmende Polyesterzusammensetzungen nach Anspruch 1, **dadurch gekennzeichnet, dass** der Anteil von Komponente A 25 bis 75 Gew.-% beträgt.

4. Flammhemmende Polyesterzusammensetzungen nach Anspruch 1, **dadurch gekennzeichnet, dass** der Anteil von Komponente B 20 bis 40 Gew.-% beträgt.

5. Flammhemmende Polyesterzusammensetzungen nach Anspruch 1, **dadurch gekennzeichnet, dass** der Anteil von Komponente C 5 bis 20 Gew.-% beträgt.

6. Flammhemmende Polyesterzusammensetzungen nach Anspruch 1, **dadurch gekennzeichnet, dass** der Anteil von Komponente D 0,05 bis 1,5 Gew.-% beträgt.

7. Flammhemmende Polyesterzusammensetzungen nach Anspruch 1, **dadurch gekennzeichnet, dass** der Anteil von Komponente E 0,01 bis 0,6 Gew.-% beträgt.

8. Flammhemmende Polyesterzusammensetzungen nach Anspruch 1, **dadurch gekennzeichnet, dass** der Anteil von Komponente F 0,05 bis 2 Gew.-% beträgt.

9. Flammhemmende Polyesterzusammensetzungen nach Anspruch 1, **dadurch gekennzeichnet, dass** der Anteil von Komponente G 0,1 bis 2 Gew.-% beträgt.

10. Flammhemmende Polyesterzusammensetzungen nach mindestens einem der Ansprüche 1 bis 9, **dadurch gekennzeichnet, dass** die Polyesterzusammensetzungen Eisen in einer Menge im Bereich von 0,0001 bis 0,2 Gew. %, vorzugsweise von 0,0002 bis 0,05 Gew. %, enthalten.

11. Flammhemmende Polyesterzusammensetzungen nach Anspruch 10, **dadurch gekennzeichnet, dass** mindestens eine der Flammschutzmittelkomponenten C), D), E) oder F) Eisen enthält.

12. Flammhemmende Polyesterzusammensetzungen nach mindestens einem der Ansprüche 1 bis 11, **dadurch gekennzeichnet, dass** diese als Komponente H ein Melaminpolyphosphat mit einem mittleren Kondensationsgrad von 2 bis 200, vorzugsweise ein Melaminpolyphosphat, dessen durchschnittlicher Kondensationsgrad 20 bis 200 beträgt, enthalten.

13. Flammhemmende Polyesterzusammensetzungen nach mindestens einem der Ansprüche 1 bis 12, **dadurch gekennzeichnet, dass** diese als Komponente I Melamincyanurat enthalten.

14. Flammhemmende Polyesterzusammensetzungen nach mindestens einem der Ansprüche 1 bis 13, **dadurch gekennzeichnet, dass** sie einen Comparative Tracking Index aufweist gemessen nach der International Electrotechnical Commission Standard IEC-60112/3 von größer gleich 500 Volt aufweist.

15. Flammhemmende Polyesterzusammensetzungen nach mindestens einem der Ansprüche 1 bis 14, **dadurch gekennzeichnet, dass** sie eine Bewertung von V0 nach UL-94 von 3.2 mm bis 0,4 mm Dicke erreicht.

16. Flammhemmende Polyesterzusammensetzungen nach mindestens einem der Ansprüche 1 bis 15, **dadurch gekennzeichnet, dass** sie einen Glow Wire Flammability Index nach IEC-60695-2-12 von mindestens 960°C bei 0,75 - 3 mm Dicke aufweist.

17. Flammhemmende Polyesterzusammensetzungen nach mindestens einem der Ansprüche 1 bis 16, **dadurch gekennzeichnet, dass** sie eine Glow Wire IgnitionTemperature nach IEC-60695-2-13 von mindestens 750 °C bei 0,75 - 3 mm Dicke aufweist.

18. Flammhemmende Polyesterzusammensetzungen nach mindestens einem der Ansprüche 1 bis 17, **dadurch gekennzeichnet, dass** es sich bei Komponente A um ein oder mehrere Polyalkylenterephthalate handelt.

19. Flammhemmende Polyesterzusammensetzungen nach Anspruch 18, **dadurch gekennzeichnet, dass** es sich bei Komponente A um ein Polyethylenterephthalat handelt.

20. Flammhemmende Polyesterzusammensetzungen nach Anspruch 18, **dadurch gekennzeichnet, dass** es sich bei Komponente A um ein Polybutylenterephthalat handelt.

21. Flammhemmende Polyesterzusammensetzungen nach Anspruch 20, **dadurch gekennzeichnet, dass** die spezifische Viskosität des Polybutylentere-phthalats, gemessen als 0,5 %-ige-Lösung in Phenol/Dichlorbenzol (1:1) bei 25 °C gemäß ISO 1628 mit einem Kapillarviskosimeter, sich im Bereich zwischen 65 und 150 cm³/g, vorzugsweise zwischen 100 und 129 cm³/g, bewegt.

22. Flammhemmende Polyesterzusammensetzungen nach mindestens einem der Ansprüche 1 bis 21, **dadurch gekennzeichnet, dass** als Komponente B Glasfasern eingesetzt werden.

23. Flammhemmende Polyesterzusammensetzungen nach mindestens einem der Ansprüche 1 bis 22, **dadurch gekennzeichnet, dass** die Polyesterzusammensetzungen ein anorganisches Phosphonat der Formel (III) als Komponente F enthalten 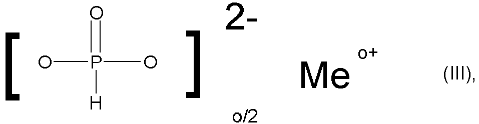
worin Me Fe, TiOᵣ, Zn oder insbesondere Al ist,
o 2 bis 3 bedeutet, und
r = (4 - o) / 2 ist.

24. Flammhemmende Polyesterzusammensetzungen nach mindestens einem der Ansprüche 1 bis 23, **dadurch gekennzeichnet, dass** Komponente G ein Ester oder ein Salz von langkettigen aliphatischen Carbonsäuren mit einer Kettenlänge von C₁₄ bis C₄₀ ist.

25. Flammhemmende Polyesterzusammensetzungen nach mindestens einem der Ansprüche 1 bis 23, **dadurch gekennzeichnet, dass** Komponente G ein Polyamidwachs ist, das durch Umsetzung von Ammoniak oder Alkylendiamin mit gesättigten und/oder ungesättigten Fettsäuren mit 14 bis 40 Kohlenstoffatomen hergestellt worden ist.

26. Flammhemmende Polyesterzusammensetzungen nach mindestens einem der Ansprüche 1 bis 25, **dadurch gekennzeichnet, dass** diese weitere Additive als Komponente J enthält, wobei die weiteren Additive ausgewählt sind aus der Gruppe bestehend aus Antioxidantien, UV-Stabilisatoren, Gammastrahlen-stabilisatoren, Hydrolysestabilisatoren, Co-Stabilisatoren für Antioxidantien, Antistatika, Emulgatoren, Nukleierungsmitteln, Weichmachern, Verarbeitungshilfsmitteln, Schlagzähmodifikatoren, Farbstoffen, Pigmenten und/oder weiteren Flammschutzmitteln, die sich von Komponenten C, D, E. F, H und I unterscheiden .

27. Verwendung der Polyesterzusammensetzungen nach einem der Ansprüche 1 bis 26 zur Herstellung von Fasern, Folien und Formkörpern, insbesondere für Anwendungen im Elektro- und Elektronikbereich.

## Claims

1. Flame-retardant polyester compositions comprising
- 25% to 95% by weight of thermoplastic polyester as component A,
- 1% to 45% by weight of fillers and/or reinforcers as component B,
- 1% to 35% by weight of phosphinic salt of the formula (I) as component C 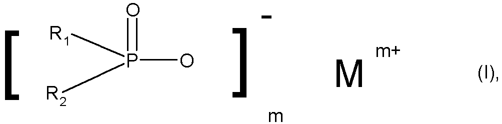
in which R₁ and R₂ are ethyl,
M is Al, Fe, TiOₚ or Zn,
m is 2 to 3, and
p = (4 - m) / 2
-0.01 to 3% by weight of compound selected from the group of the Al, Fe, TiOₚ and Zn salts of ethylbutylphosphinic acid, of dibutylphosphinic acid, of ethylhexylphosphinic acid, of butylhexylphosphinic acid and/or of dihexylphosphinic acid as component D
- 0.001% to 1% by weight of phosphonic salt of the formula II as component E 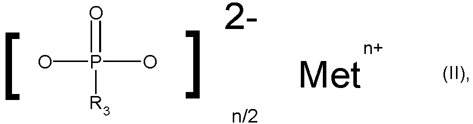
in which R₃ is ethyl,
Met is Al, Fe, TiO_{q} or Zn,
n is 2 to 3, and
q = (4 - n) / 2,
- 0.005% to 6% by weight of inorganic phosphonate as component F, and
- 0.05% to 5% by weight of wax selected from the group consisting of the polyolefin waxes, amide waxes, natural waxes, long-chain aliphatic carboxylic acids having a chain length of C₁₄ to C₄₀ and/or esters or salts thereof as component G, where the percentages are based on the total amount of the polyester composition.

2. Flame-retardant polyester compositions according to Claim 1, **characterized in that** M and Met are Al, m and n are 3, and **in that** components D and F are aluminum salts.

3. Flame-retardant polyester compositions according to Claim 1, **characterized in that** the proportion of component A is 25% to 75% by weight.

4. Flame-retardant polyester compositions according to Claim 1, **characterized in that** the proportion of component B is 20% to 40% by weight.

5. Flame-retardant polyester compositions according to Claim 1, **characterized in that** the proportion of component C is 5% to 20% by weight.

6. Flame-retardant polyester compositions according to Claim 1, **characterized in that** the proportion of component D is 0.05% to 1.5% by weight.

7. Flame-retardant polyester compositions according to Claim 1, **characterized in that** the proportion of component E is 0.01% to 0.6% by weight.

8. Flame-retardant polyester compositions according to Claim 1, **characterized in that** the proportion of component F is 0.05% to 2% by weight.

9. Flame-retardant polyester compositions according to Claim 1, **characterized in that** the proportion of component G is 0.1% to 2% by weight.

10. Flame-retardant polyester compositions according to at least one of Claims 1 to 9, **characterized in that** the polyester compositions contain iron in an amount within the range from 0.0001% to 0.2% by weight, preferably from 0.0002% to 0.05% by weight.

11. Flame-retardant polyester compositions according to Claim 10, **characterized in that** at least one of the flame-retardant components C), D), E) and F) contains iron.

12. Flame-retardant polyester compositions according to at least one of Claims 1 to 11, **characterized in that** said polyester compositions comprise a melamine polyphosphate having an average degree of condensation of 2 to 200 as component H, preferably a melamine polyphosphate having an average degree of condensation of 20 to 200.

13. Flame-retardant polyester compositions according to at least one of Claims 1 to 12, **characterized in that** said polyester compositions comprise melamine cyanurate as component I.

14. Flame-retardant polyester compositions according to at least one of Claims 1 to 13, **characterized in that** it has a comparative tracking index measured according to International Electrotechnical Commission Standard IEC-60112/3 of not less than 500 V.

15. Flame-retardant polyester compositions according to at least one of Claims 1 to 14, **characterized in that** it attains a UL-94 V-0 assessment at thickness from 3.2 mm to 0.4 mm.

16. Flame-retardant polyester compositions according to at least one of Claims 1 to 15, **characterized in that** it has a glow wire flammability index according to IEC-60695-2-12 of at least 960°C at thickness 0.75-3 mm.

17. Flame-retardant polyester compositions according to at least one of Claims 1 to 16, **characterized in that** it has a glow wire ignition temperature according to IEC-60695-2-13 of at least 750°C at thickness 0.75-3 mm.

18. Flame-retardant polyester compositions according to at least one of Claims 1 to 17, **characterized in that** component A comprises one or more polyalkylene terephthalates.

19. Flame-retardant polyester compositions according to Claim 18, **characterized in that** component A is a polyethylene terephthalate.

20. Flame-retardant polyester compositions according to Claim 18, **characterized in that** component A is a polybutylene terephthalate.

21. Flame-retardant polyester compositions according to Claim 20, **characterized in that** the specific viscosity of the polybutylene terephthalate, measured as a 0.5% solution in phenol/dichlorobenzene (1:1) at 25°C to ISO 1628 with a capillary viscometer, is within the range between 65 and 150 cm³/g, preferably between 100 and 129 cm³/g.

22. Flame-retardant polyester compositions according to at least one of Claims 1 to 21, **characterized in that** glass fibers are used as component B.

23. Flame-retardant polyester compositions according to at least one of Claims 1 to 22, **characterized in that** the polyester compositions comprise an inorganic phosphonate of the formula (III) as component F 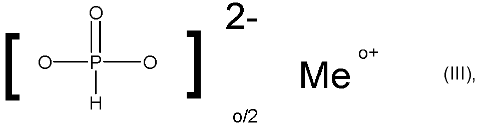
in which Me is Fe, TiOᵣ, Zn or especially Al,
o is 2 to 3, and
r = (4 - o) / 2.

24. Flame-retardant polyester compositions according to at least one of Claims 1 to 23, **characterized in that** component G is an ester or a salt of long-chain aliphatic carboxylic acids having a chain length of C₁₄ to C₄₀.

25. Flame-retardant polyester compositions according to at least one of Claims 1 to 23, **characterized in that** component G is a polyamide wax which has been prepared by reaction of ammonia or alkylenediamine with saturated and/or unsaturated fatty acids having 14 to 40 carbon atoms.

26. Flame-retardant polyester compositions according to at least one of Claims 1 to 25, **characterized in that** said polyester composition comprises further additives as component J, where the further additives are selected from the group consisting of antioxidants, UV stabilizers, gamma ray stabilizers, hydrolysis stabilizers, costabilizers for antioxidants, antistats, emulsifiers, nucleating agents, plasticizers, processing auxiliaries, impact modifiers, dyes, pigments and/or further flame retardants other than components C, D, E, F, H and I.

27. Use of the polyester compositions according to one of Claims 1 to 26 for production of fibers, films and moldings, especially for uses in the electricals and electronics sector.

## Revendications

1. Compositions de polyester ignifuges contenant
- 25 à 95 % en poids d'un polyester thermoplastique, comme composant A,
- 1 à 45 % en poids de charges et/ou de substances de renforcement, comme composant B,
- 1 à 35 % en poids d'un sel de l'acide phosphinique de Formule (I), comme composant C 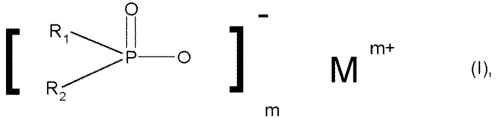
dans laquelle R₁ et R₂ représentent un éthyle,
M représente Al, Fe, TiOₚ ou Zn,
m représente 2 à 3, et
p = (4 - m)/2
- 0,01 à 3 % en poids d'un composé choisi parmi les sels d'Al, de Fe, de TiOₚ ou de Zn de l'acide éthylbutylphosphinique, de l'acide dibutylphosphinique, de l'acide éthylhexylphosphinique, de l'acide butylhexylphosphinique et/ou de l'acide dihexylphosphinique, comme composant D
- 0,001 à 1 % en poids d'un sel de l'acide phosphonique de Formule II, comme composant E 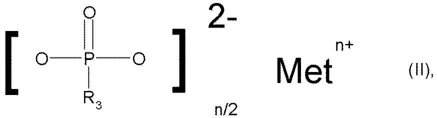
dans laquelle R₃ représente un éthyle,
Met représente Al, Fe, TiO_{q} ou Zn,
n représente 2 à 3, et
q = (4 - n)/2
- 0,005 à 6 % en poids d'un phosphonate inorganique, comme composant F, et
- 0,05 à 5 % en poids d'une cire choisie dans le groupe des cires de polyoléfine, des cires d'amide, des cires naturelles, des acides carboxyliques aliphatiques à longue chaîne ayant une longueur de chaîne de C₁₄ à C₄₀ et/ou de leurs esters ou sels, comme composant G, les indications de pourcentage se rapportant à la quantité totale de la composition de polyesters.

2. Compositions de polyester ignifuges selon la revendication 1, **caractérisées en ce que** M et Met représentent Al, m et n représentent 3, et **en ce que** les composants D et F sont des sels d'aluminium.

3. Compositions de polyester ignifuges selon la revendication 1, **caractérisées en ce que** la proportion du composant A est de 25 à 75 % en poids.

4. Compositions de polyester ignifuges selon la revendication 1, **caractérisées en ce que** la proportion du composant B est de 20 à 40 % en poids.

5. Compositions de polyester ignifuges selon la revendication 1, **caractérisées en ce que** la proportion du composant C est de 5 à 20 % en poids.

6. Compositions de polyester ignifuges selon la revendication 1, **caractérisées en ce que** la proportion du composant D est de 0,05 à 1,5 % en poids.

7. Compositions de polyester ignifuges selon la revendication 1, **caractérisées en ce que** la proportion du composant E est de 0,01 à 0,6 % en poids.

8. Compositions de polyester ignifuges selon la revendication 1, **caractérisées en ce que** la proportion du composant F est de 0,05 à 2 % en poids.

9. Compositions de polyester ignifuges selon la revendication 1, **caractérisées en ce que** la proportion du composant G est de 0,1 à 2 % en poids.

10. Compositions de polyester ignifuges selon au moins l'une des revendications 1 à 9, **caractérisées en ce que** les compositions de polyester contiennent du fer en une quantité dans la plage de 0,0001 à 0,2 % en poids, de préférence de 0,0002 à 0,05 % en poids.

11. Compositions de polyester ignifuges selon la revendication 10, **caractérisées en ce que** l'au moins l'un des composants retardateurs de flamme C), D), E) ou F) contient du fer.

12. Compositions de polyester ignifuges selon au moins l'une des revendications 1 à 11, **caractérisées en ce qu'**elles contiennent comme composant H un polyphosphate de mélamine ayant un degré moyen de condensation de 2 à 200, de préférence un polyphosphate de mélamine dont le degré moyen de condensation est de 20 à 200.

13. Compositions de polyester ignifuges selon au moins l'une des revendications 1 à 12, **caractérisées en ce qu'**elles contiennent comme composant I du cyanurate de mélamine.

14. Compositions de polyester ignifuges selon au moins l'une des revendications 1 à 13, **caractérisées en ce qu'**elles présentent un indice de tenue au cheminement, mesuré selon la norme de la Commission électrotechnique internationale CEI-60112/3, supérieur ou égal à 500 volts.

15. Compositions de polyester ignifuges selon au moins l'une des revendications 1 à 14, **caractérisées en ce qu'**elles atteignent un classement de V0 selon UL-94 pour une épaisseur de 3,2 mm à 0,4 mm.

16. Compositions de polyester ignifuges selon au moins l'une des revendications 1 à 15, **caractérisées en ce qu'**elles présentent un indice d'inflammabilité au fil incandescent selon CEI-60695-2-12 d'au moins 960 °C pour une épaisseur de 0,75-3 mm.

17. Compositions de polyester ignifuges selon au moins l'une des revendications 1 à 16, **caractérisées en ce qu'**elles présentent un indice d'inflammabilité au fil incandescent selon CEI-60695-2-13 d'au moins 750 °C pour une épaisseur de 0,75-3 mm.

18. Compositions de polyester ignifuges selon au moins l'une des revendications 1 à 17, **caractérisées en ce que**, pour ce qui concerne le composant A, il s'agit d'un ou plusieurs poly(téréphtalates d'alkylène).

19. Compositions de polyester ignifuges selon la revendication 18, **caractérisées en ce que**, pour ce qui concerne le composant A, il s'agit d'un poly(téréphtalate d'éthylène).

20. Compositions de polyester ignifuges selon la revendication 18, **caractérisées en ce que**, pour ce qui concerne le composant A, il s'agit d'un poly(téréphtalate de butylène).

21. Compositions de polyester ignifuges selon la revendication 20, **caractérisées en ce que** la viscosité spécifique du poly(téréphtalate de butylène), mesurée sous forme d'une solution à 0,5 % dans du phénol/dichlorobenzène (1:1) à 25° C selon ISO 1628 avec un viscosimètre capillaire, varie dans la plage entre 65 et 150 cm³/g, de préférence entre 100 et 129 cm³/g.

22. Compositions de polyester ignifuges selon au moins l'une des revendications 1 à 21, **caractérisées en ce qu'**on utilise comme composant B des fibres de verre.

23. Compositions de polyester ignifuges selon au moins l'une des revendications 1 à 22, **caractérisées en ce que** les compositions de polyester contiennent un phosphonate inorganique de Formule (III) comme composant F 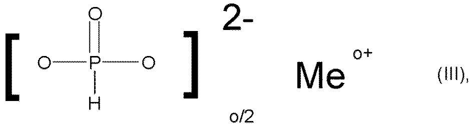
dans laquelle Me représente Fe, TiOᵣ, Zn ou en particulier Al,
o représente 2 à 3, et
r = (4 - o)/2.

24. Compositions de polyester ignifuges selon au moins l'une des revendications 1 à 23, **caractérisées en ce que** le composant G est un ester ou un sel d'acides carboxyliques aliphatiques à longue chaîne ayant une longueur de chaîne de C₁₄ à C₄₀.

25. Compositions de polyester ignifuges selon au moins l'une des revendications 1 à 23, **caractérisées en ce que** le composant G est une cire de polyamide, qui a été fabriquée par réaction d'ammoniac ou d'une alkylènediamine avec des acides gras saturés et/ou insaturés ayant 14 à 40 atomes de carbone.

26. Compositions de polyester ignifuges selon au moins l'une des revendications 1 à 25, **caractérisées en ce qu'**elles contiennent comme composant J des additifs supplémentaires, les additifs supplémentaires étant choisis dans le groupe consistant en les antioxydants, les stabilisants UV, les stabilisants vis-à-vis des rayons gamma, les stabilisants d'hydrolyse, les co-stabilisants pour antioxydants, les antistatiques, les émulsifiants, les agents de nucléation, les plastifiants, les auxiliaires de mise en œuvre, les modifiants choc, les colorants, les pigments et/ou d'autres retardateurs de flamme, qui sont différents des composants C, D, E, F, H et I.

27. Utilisation des compositions de polyester selon l'une des revendications 1 à 26 pour la fabrication de fibres, de feuilles et d'objets moulés, en particulier pour des utilisations dans le domaine électrique et électronique.
